# EUROPEAN PATENT APPLICATION

(11) **EP 1 072 931 A2**
(43) Date of publication of application: **31.01.2001**
(21) Application number: 00115056.4
(22) Date of filing: 26.07.2000
(51) Int. Cl.: G02F 1/1339, G02F 1/1347

(54) **Liquid crystal display and method of producing a liquid crystal display**

(30) Priority: 27.07.1999 JP 21235199; 30.07.1999 JP 21777899
(71) Applicant: MINOLTA CO., LTD., Chuo-Ku, Osaka-Shi, Osaka 541-8556 (JP)
(72) Inventor: Yamada, Jun, Minolta Co., Ltd., Chuo-ku, Osaka-shi, Osaka 541-8556 (JP); Miyoshi, Tatsuhiko, Chuo-ku, Osaka-shi, Osaka 854-8556 (JP); Nishiguchi, Kenji, Minolta Co., Ltd., Kawasaki-shi, Kanagawa-ken 214-0021 (JP)
(74) Representative: HOFFMANN - EITLE

(57) **Abstract**

A liquid crystal display which has n liquid crystal light control layers and n+1 substrates (10,11,12,13) stacked alternately. Each of the liquid crystal light control layers has a liquid crystal material (15,16,17), spacers (27) for keeping a gap between the substrates which sandwich the liquid crystal light control layer and resin nodules (25) which are arranged in a predetermined way for connecting the substrates which sandwich the liquid crystal light control layer. Further, a sealing wall (26) is provided to surround a displaying area of each liquid crystal light control layer. A method of producing such a liquid crystal display has a step of filling a first liquid crystal material between a first substrate and a second substrate by pressing the first substrate and the second substrate against each other and a step of filling a second liquid crystal material between the second substrate and a third substrate by pressing the second substrate and the third substrate against each other.

## Description

### [Technical Field]

The present invention relates to a liquid crystal display and a method of producing a liquid crystal display, and more particularly to a liquid crystal display in which a plurality of liquid crystal light control layers and substrates are stacked alternately and a method of producing such a liquid crystal display.

### [Background Art]

Various kinds of laminate type liquid crystal displays have been suggested. For example, a three-layered liquid crystal display in which a red reflective liquid crystal layer, a green reflective liquid crystal layer and a blue reflective liquid crystal layer are stacked has been suggested.

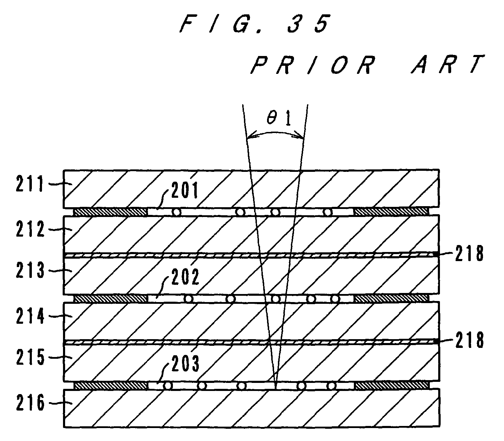

Such a laminate type liquid crystal display is usually of the structure shown by Fig. 35. In the structure, three liquid crystal layers 201, 202 and 203 are sandwiched by pairs of substrates 211 and 212, 213 and 214, and 215 and 216, respectively, and these three units, each of which comprises one liquid crystal layer and two substrates, are bonded together by adhesive layers 218. Thus, in this structure, for n liquid crystal layers, 2n substrates are necessary.

A liquid crystal display of this conventional structure is easy to be produced. However, because two substrates exist between adjacent liquid crystal layers, the picture on the screen is dark, the angle of field θ 1 is not sufficiently large, and it is difficult to decrease the weight. Also, because an adhesive layer for joining substrates exists between adjacent liquid crystal layers, light is unnecessarily scattered and reflected, thereby resulting in degradation of display performance.

Meanwhile, it has been suggested that liquid crystal layers and substrates are alternately stacked. A liquid crystal display of this structure has n liquid crystal layers and n+1 substrates. In this structure, because the number of substrates is small, the liquid crystal cells are thin and fragile, and they must be handled carefully until they are completely assembled into a product. For example, it is difficult to convey the liquid crystal cells, and they must be handled carefully when anisotropy conductive films are to be formed thereon or when they are fitted in an outer frame. Also, there have been no economical and easy ways of producing a liquid crystal display of this structure.

When liquid crystal layers of a polymer dispersed type are used in a laminate type liquid crystal display, by setting the percentage of the polymer component in the liquid crystal layer large enough, the polymer component can reinforce the liquid crystal display, and it may be possible to omit the substrates among the liquid crystal layers. In this structure, however, the polymer component is distributed irregularly in the displaying area, which results in density unevenness, and a high voltage is necessary to drive the liquid crystal because of the polymer component contained therein.

### [Disclosure of the Invention]

It is an object of the present invention to provide a liquid crystal display which has a smaller number of substrates, thereby decreasing the production cost and enlarging the angle of field, and which improves in display performance.

Another object of the present invention is to provide a liquid crystal display which is of a sufficiently strong structure while having thin and light substrates.

Further, another object of the present invention is to provide a method of producing a laminate type liquid crystal display which permits easy and low-cost mass-production.

In order to attain the objects above, a first liquid crystal display according to the present invention comprises n+1 (where n is a natural number not less than 2) substrates and n liquid crystal light control layers alternately stacked, and in each of the liquid crystal light control layers comprises: a liquid crystal material; a plurality of spacers for keeping a gap between the substrates which sandwich the liquid crystal light control layer; and a plurality of resin nodules for connecting the substrates which sandwich the liquid crystal light control layer, said resin nodules being distributed in accordance with a predetermined arrangement.

It is preferred to use a material which exhibits a cholesteric phase and a bistable characteristic as the liquid crystal material. The resin nodules may be, for example, columns arranged in a periodic lattice.

In the first liquid crystal display according to the present invention, at least two liquid crystal light control layers and substrates which are one more in number than the liquid crystal light control layers are stacked alternately. Thus, the number of substrates can be decreased compared with conventional laminate type liquid crystal displays. Especially, as the number of liquid crystal light control layers is increasing, the number of substrates can be decreased more, thereby resulting in a larger reduction in production cost and more lightening and more thinning of the product. In the liquid crystal display, an adhesive layer, which is necessary for joining liquid crystal cells in a conventional liquid crystal display, can be eliminated. Thereby, unnecessary scattering and reflection can be suppressed, and the transmittance is improved, which results in an improvement in display performance.

Further, because the first liquid crystal display requires a smaller number of substrates and no adhesive layers, the display can be made thinner and obtains a larger angle of field. A process of joining liquid crystal cells, each of which has a liquid crystal light control layer between two substrates, can be eliminated, and the productivity can be improved.

In the first liquid crystal display according to the present invention, it is preferred that at least one of the substrates is flexible. Using at least one flexible substrate is more effective not only to lighten and thin the liquid crystal display but also to enlarge the angle of field than using only glass substrates. All the substrates may be flexible, and in this case, the liquid crystal display can be made lighter and thinner, and the angle of field becomes larger. Moreover, in this case, the liquid crystal display has appropriate flexibility and is less likely to be cracked.

Since spacers and resin nodules are included in each of the liquid crystal light control layers of the first liquid crystal display according to the present invention, in producing the liquid crystal display, it is possible to laminate a plurality of substrates while filling liquid crystal among the substrates. This means that a liquid crystal filling process and a substrate laminating process can be carried out simultaneously, thereby decreasing the number of processes and improving the productivity. Mainly because of the resin nodules, the substrate laminating process can be carried out simultaneously with the liquid crystal filling process. The forth of the resin nodules to bond the substrates together is larger than the forth of the substrates to bend and separate from each other after the laminating process by use of a heating roller and/or a pressing roller. The substrates can be bonded together by the resin nodules, while the gaps among the substrates can be kept by the spacers, and thus, the gaps among the substrates can be regulated appropriately.

The resin nodules are arranged in a displaying area of each of the liquid crystal light control layers and support and bond the substrates which sandwich the liquid crystal light control layer. Thermoplastic resin, which is softened by heat and hardened by being cooled to room temperature, is usable as the material of the resin nodules. The heating time to soften the thermoplastic resin is short, which is an advantage of using thermoplastic resin. Another advantage of using thermoplastic resin is to have a high reliability. When the resin nodules are made of a material of which main component is thermosetting resin, the heat resistance is high. If a method in which substrates are laminated one by one is adopted to produce the liquid crystal display, some of the substrates are subjected to a heat treatment repeatedly; however, if the resin nodules mainly made of thermoplastic resin are formed on the substrates, the resin nodules sufficiently resist against the repetitions of a heat treatment. When ultraviolet ray setting resin (ultraviolet curing resin) is used as the material of the resin nodules, bends of the substrates, which may occur in a heat treatment, can be avoided, which results in an improvement in laminating accuracy. Also, the ultraviolet radiating time for hardening the resin is short, which shortens the producing time. If the resin nodules are columns which are arranged in a periodic lattice, the resin nodules have a strong effect to reinforce flexible substrates.

Because of the spacers included in each of the liquid crystal light control layers, the gaps among the substrates can be kept even. Especially by using fixed type spacers, the adhesion between the spacers and the substrates is heightened. Thereby, even if the liquid crystal display is bent, the spacers do not move, and there are no possibilities that the spacers may harm the substrates while moving, thereby causing a failure in display.

In the first liquid crystal display according to the present invention, preferably, each of the liquid crystal light control layers has a sealing wall which encloses the displaying area. The sealing wall insulates the liquid crystal material from outside air, keeps the purity of the liquid crystal material and heighten the reliability of the liquid crystal display. Thermosetting resin, which is less likely to be influenced by heat and is strong against repetitions of a heat treatment, is usable as the material of the sealing wall. Also, because thermosetting resin performs high sealing performance, the liquid crystal material enclosed by the sealing wall made of thermosetting resin never be exposed to outside air, and the liquid crystal display can obtain a high reliability. Thermoplastic resin, which is softened by heat and hardened by being cooled to room temperature, is also usable as the material of the sealing wall. The heating time to soften thermoplastic resin is short, which is an advantage of using thermoplastic resin. Another advantage of using thermoplastic resin is to have a high reliability. Further, ultraviolet ray setting resin is also usable as the material of the sealing wall. The ultraviolet radiating time to harden ultraviolet ray setting resin is short, which shortens the producing time. In this case, it is not necessary to carry out a heating treatment, and bends of the substrates which may be caused by a heat treatment can be avoided, which results in an improvement in laminating accuracy. It is possible to use these kinds of resin in mixture.

In the meantime, as larger substrates are used, it becomes more difficult to disperse spacers thereon evenly. Also, when spacers are dispersed on a substrate with a sealing wall already formed thereon, there may result in a case wherein the sealing wall may include no spacers therein. In order to avoid the case, spacers may be mixed in the material of the sealing wall evenly, and thereby, the gaps among the substrates can be certainly kept even. The same effect can be obtained by mixing spacers in the material of the resin nodules.

In the first liquid crystal display according to the present invention, a plurality of electrodes may be formed on each of the substrates. Preferably, n-1 substrates of the n+1 substrates which are sandwiched by the n liquid crystal light control layers have a plurality of electrodes on their respective both surfaces, and the other two substrates have a plurality of electrodes on their respective one surfaces. This arrangement permits individual voltage application to all the liquid crystal control layers among the substrates, and it becomes possible to drive the liquid crystal light control layers according to their respective characteristics.

In the first liquid crystal display according to the present invention, at least one of the substrates may have a polarizing characteristic or a polarizing layer. At least one of the substrates may have a retardation characteristic or a retardation layer. Conventionally, after producing a liquid crystal display, a polarizing film or a retardation film is stuck on the liquid crystal display. However, by imparting at least one of the substrates with a polarizing function or a retardation function, the necessity of providing a polarizing film or a retardation film on the liquid crystal display can be eliminated. This means that the process of sticking such a film to the liquid crystal display can be omitted, which eliminates the possibilities of contaminating the liquid crystal display, of giving finger prints thereon and of taking bubbles in during the sticking process and which improves the productivity.

By imparting at least one of the substrates with a color filtering characteristic or by proving a color filtering layer to at least one of the substrates, the display performance can be improved. Especially in a selective reflection type liquid crystal display which uses selective reflection by liquid crystal in a cholesteric phase, by imparting at least one of the substrates with a color filtering function, the color purity can be improved, and the contrast can be heightened. With this arrangement, the incident angle of external light is large, and when the reflected light shifts into shorter wavelengths, the light of shorter wavelengths is absorbed by the color filter. Consequently, even in this case, the display color does not change, and the color purity is not lowered.

A substrate which is located in the opposite side to the light incident side of the liquid crystal display may have a light absorbing characteristic or a light absorbing layer. Especially in a reflective liquid crystal display which exhibits a cholesteric phase, with this arrangement, the contrast can be heightened. Alternatively, a substrate which is located in the opposite side to the light incident side of the liquid crystal display may have a reflecting characteristic or a reflecting layer. With this arrangement, a reflective type liquid crystal display with a high reflection rate can be obtained. Also, it is possible to impart a substrate which is located in the opposite side to the light incident side of the liquid crystal display with a scattering characteristic or an anti-reflecting characteristic or to provide the substrate with a scattering layer or an anti-reflecting layer. In this case, further by providing an illumination light on the back surface or on a side of the liquid crystal display, a transmitting type liquid crystal display can be obtained. Further, it is not necessary to stick a reflecting film, a scattering or the like to the liquid crystal display, which eliminates the possibilities of contaminating the liquid crystal display, of giving finger prints thereon and of taking bubbles in the liquid crystal light control layers and which improves the productivity.

A second liquid crystal display according to the present invention comprises: a first unit comprising a first substrate, a first liquid crystal light control layer, a second substrate, a second liquid crystal light control layer and a third substrate which are stacked in this order; and a second unit which is stacked on and joined with said first unit, said second unit comprising a fourth substrate, a third liquid crystal light control layer and a fifth substrate which are stacked in this order. The first, second and third liquid crystal light control layers do not always necessarily include spacers and resin nodules.

In other words, the second liquid crystal display according to the present invention comprises a first unit which has two liquid crystal light control layers sandwiched among three substrates and a second unit which has a liquid crystal light control layer sandwiched between two substrates. Thus, the second liquid crystal display has three liquid crystal light control layers and five substrates.

The simplest structure for a full-color laminate type liquid crystal display is an alternate laminate of three liquid crystal light control layers and four substrates. In this type with three liquid crystal light control layers and four substrates, there are two substrates which have electrodes on their respective both surfaces. In producing liquid crystal displays of this type, the percentage of defects is not always satisfactorily low because of trouble such as breaking of electrode wires. On the other hand, in the type with three liquid crystal light control layers and five substrates, only one substrate with electrodes on its both surfaces is necessary, and the percentage of defects in producing liquid crystal displays of this type can be lowered.

In the second liquid crystal display according to the present invention, the number of substrates (five) is smaller than the number of substrates (six) in a conventional liquid crystal display, and therefore, the contrast is higher than that of the conventional liquid crystal display. Especially by disposing the first unit comprising two liquid crystal light control layers and three substrates in the light incidence side and by disposing the second unit with one liquid crystal light control layer and two substrates far from the light incidence side, the two liquid crystal light control layers in the first unit (in the light incidence side) are hardly influenced by scattering of light by an adhesive layer which joins the first unit and the second unit together, and the display performance of the liquid crystal display can be improved.

A first producing method according to the present invention comprises the steps of: (a) filling a first liquid crystal material between a first substrate and a second substrate by pressing said first substrate and said second substrate against each other; and (b) filling a second liquid crystal material between said second substrate and a third substrate by pressing second substrate and said third substrate against each other. The steps (a) and (b) may be executed simultaneously or sequentially.

Preferably, the first producing method further comprises the step of (c) filling a third liquid crystal material between said third substrate and a fourth substrate by pressing said third substrate and said fourth substrate against each other. The steps (a), (b) and (c) may be executed simultaneously or sequentially. Alternatively, the first producing method further comprises the steps of (c) filling a third liquid crystal material between a fourth substrate and a fifth substrate by pressing said fourth substrate and said fifth substrate against each other; and (d) joining said third substrate and said fourth substrate together.

The step (a) may comprise the steps of: (a-1) supplying the first liquid crystal material on said first substrate; and (a-2) spreading the first liquid crystal material by pressing said second substrate against said first substrate through the first liquid crystal material. Further, the step (a-2) may comprise the steps of: (a-2-1) placing said first substrate on a table; and (a-2-2) pressing said second substrate against said first substrate placed on the table by using at least one roller. Alternatively, the step (a-2) may comprise the step of (a-2-1) pressing said first substrate and said second substrate by inserting said first substrate and said second substrate into a nip of a pair of rollers.

In the first producing method according to the present invention, lamination of substrates and filling of liquid crystal are carried out in one process, and more specifically, while substrates are laminated, liquid crystal supplied on a substrate is spread. Thereby, the producing time can be shortened.

In the first producing method, a plurality of substrates are laminated with liquid crystal materials sandwiched among the substrates, and the substrates are joined together preferably by heat, thereby, decreasing the number of adhesive layers to bond the substrates. According to this method, in composing a liquid crystal display of n liquid crystal light control layers and n+1 substrates, no adhesive layers are necessary. Therefore, a liquid crystal display produced by this method can inhibit scattering and reflection of light caused by adhesive layers, which are problems in a liquid crystal display produced by a conventional method, and improves in transmittance.

By executing the steps (a), (b) and (c) simultaneously, the number of times when the substrates are subjected to a heating process can be decreased, and degradation of the liquid crystal materials can be prevented. On the other hand, executing the steps (a), (b) and (c) sequentially is easy. Also, in this case, after a laminate of substrates and a liquid crystal light control layer is made, the laminate can be checked, and then, the subsequent process can be executed. Therefore, the percentage of defects can be decreased.

For lamination of substrates, various kinds of devices can be used. For example, a pair of rollers is usable, and a combination of a table and a roller is usable.

A second producing method according to the present invention comprises the steps of: (a) providing a first liquid crystal display unit which comprises p (where p is a natural number not less than 2) liquid crystal light control layers and p+1 substrates alternately stacked; (b) providing a second liquid crystal display unit which comprises q (where q is a natural number not less than 1) liquid crystal light control layers and q+1 substrates alternately stacked; and (c) stacking and joining said first liquid crystal display unit and said second liquid crystal display unit together. This second producing method is an easy way of producing the second liquid crystal according to the present invention.

### [Brief Description of the Drawings]

These and other objects and features of the present invention will be apparent from the following description with reference to the accompanying drawings, in which:
Fig. 1 is a sectional view of a first embodiment of a liquid crystal display according to the present invention;
Fig. 2 is a sectional view of a second embodiment of a liquid crystal display according to the present invention;
Figs. 3a and 3b are illustrations which show steps of producing the second embodiment;
Fig. 4 is an illustration which shows a step of producing the second embodiment;
Fig. 5 shows an illustration which shows a first way of laminating substrates in the second embodiment;
Fig. 6 shows an illustration which shows a second way of laminating substrates in the second embodiment;
Fig. 7 is a sectional view of a third embodiment of a liquid crystal display according to the present invention;
Fig. 8 is a sectional view of a fourth embodiment of a liquid crystal display according to the present invention;
Fig. 9 is a sectional view of a fifth embodiment of a liquid crystal display according to the present invention;
Fig. 10 is a sectional view of a sixth embodiment of a liquid crystal display according to the present invention;
Figs. 11a through 11f are illustrations which show a first way of laminating substrates in the sixth embodiment;
Figs. 12a through 12d are illustrations which show a second way of laminating substrates in the sixth embodiment;
Fig. 13 is a sectional view of a seventh embodiment of a liquid crystal display according to the present invention;
Fig. 14 is an illustration which shows alignment of liquid crystal in the seventh embodiment;
Fig. 15 is a sectional view of an eighth embodiment of a liquid crystal display according to the present invention;
Fig. 16 is a sectional view of a micro color filter in the eighth embodiment;
Figs. 17a, 17b and 17c are illustrations which show arrangements of electrodes on both surfaces or one surface of a substrate.
Fig. 18 is a sectional view of a liquid crystal display which is produced by a producing method according to the present invention;
Fig. 19 is a schematic view which shows a first embodiment of a producing method according to the present invention;
Fig. 20 is a schematic view which shows a second embodiment of a producing method according to the present invention;
Fig. 21 is a schematic view which shows a third embodiment of a producing method according to the present invention;
Fig. 22 is a schematic view which shows a fourth embodiment of a producing method according to the present invention;
Fig. 23 is a schematic view which shows a fifth embodiment of a producing method according to the present invention;
Fig. 24 is a schematic view which shows a sixth embodiment of a producing method according to the present invention;
Fig. 25 is a schematic view which shows a seventh embodiment of a producing method according to the present invention;
Fig. 26 is a plan view of a substrate which has been through a film forming process;
Fig. 27 is an illustration which shows the film forming process;
Fig. 28 is an illustration which shows a laminating process by use of a first exemplary laminating device;
Fig. 29 is an illustration which shows a laminating process by use of a second exemplary laminating device;
Figs. 30a and 30b are illustrations which show laminating processes by use of a third exemplary laminating device;
Fig. 31 is an illustration which shows a laminating process by use of a fourth exemplary laminating device;
Fig. 32 is an illustration which shows a laminating process in another embodiment by use of the second exemplary laminating device;
Fig. 33 is an illustration which shows a laminating process in another embodiment by use of the fourth exemplary laminating device;
Fig. 34 is an illustration which shows a laminating process in another embodiment by use of the second exemplary laminating device; and
Fig. 35 is a sectional view of a conventional laminate type liquid crystal display.

### [Best Mode for Carrying out the invention]

Embodiments of liquid crystal displays and liquid crystal display producing methods according to the present invention are described with reference to the accompanying drawings.

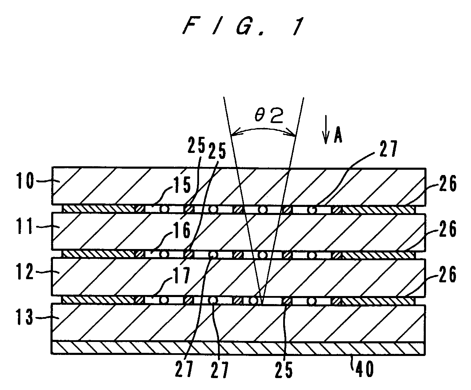

### First Embodiment of Liquid Crystal Display; See Fig. 1

Fig. 1 shows a first embodiment of a liquid crystal display according to the present invention. In the liquid crystal display, viewing from the light incident side shown by arrow "A", three liquid crystal light control layers 15, 16 and 17 which reflect blue, green and red, respectively and four substrates 10, 11 and 12 and 13 are stacked alternately in this order. Between two substrates which face each other with a liquid crystal light control layer in-between, resin nodules 25 for bonding and supporting the substrates and spacers 27 for keeping a gap between the substrates are provided, and further, on the periphery of a displaying area, a sealing wall 26 is provided.

In the following, a specific example which was produced by the inventors is described.

As the substrates 10, 11 and 12, polycarbonate (PC) substrates were used, and as the lowermost substrate 13, a glass substrate with a light absorbing layer 40 on its lower side was used. As the spacers 27 among the substrates, Micropearl (made by Sekisui Finechemical Co., Ltd.) with a particle diameter of 8 µ m was dispersed at a density of approximately 200 particles per 1mm². Also, as the resin nodules 25 to join and support the substrates with the liquid crystal light control layers 15, 16 and 17 thereamong, columns of polyester resin PES-360S30 (made by Three Bond Co., Ltd.) with a diameter of 50 µ m and a height of 8 µ m were arranged into a lattice at a pitch of 300 µ m.

As the liquid crystal light control layers 15, 16 and 17, for a polymer dispersed type liquid crystal display mode, a mixture of chiral nematic liquid crystal which was prepared by adding a chiral agent to nematic liquid crystal with photosetting resin was filled among the substrates, and ultraviolet rays were radiated to harden the resin. Consequently, the mixture was separated into the liquid crystal component and the polymer component. For the liquid crystal red light control layer, cholesteric liquid crystal which selectively reflects light around 680nm (prepared by adding a chiral agent CB15 made by Merck & Company to nematic liquid crystal BL46 made by Merck & Company at 32.6wt%) was used. For the liquid crystal green light control layer, cholesteric liquid crystal which selectively reflects light around 550nm (prepared by adding a chiral agent CB15 made by Merck & Company to nematic liquid crystal BL46 made by Merck & Company at 40wt%) was used. For the liquid crystal blue light control layer, cholesteric liquid crystal which reflects light around 480nm (prepared by adding a chiral agent CB15 made by Merck & Company to nematic liquid crystal BL46 made by Merck & Company at 47.6wt%) was used. When these three layers were laminated, white light which appeared to be natural light could be obtained.

When a pressure is applied to the liquid crystal in a focal-conic state with an input device (pen), the pressed portion comes to a planar state. In this way, black-and-white display is possible. Since the liquid crystal has a memory effect, once information is written thereon, display of the information can be continued for a long time. By heating the liquid crystal to return the liquid crystal to an isotropic phase and thereafter cooling the liquid crystal, the liquid crystal comes to a focal-conic state, and thus, the display can be erased. Thus, the three-layered liquid crystal display which was produced in the above-described method was rewritable or erasable and could make a high-contrast display.

This liquid crystal display can replace paper used for calendars and schedules. Because the liquid crystal display is rewritable, it will be in use almost permanently. Once information is written on the liquid crystal display, the liquid crystal display continues displaying the information without consuming electric power. Thus, the use of such liquid crystal displays contributes to a decrease in usage of paper resource and to energy saving.

The liquid crystal display of the first embodiment is not of the six-substrate structure in which three units, each of which has a liquid crystal light control layer between a pair of substrates, are laminated but of a structure which has three liquid crystal light control layers among four substrates. The liquid crystal display has a larger angle of field θ 2. Moreover, because the number of substrates is smaller and because the display is thin, it is easier to write information thereon.

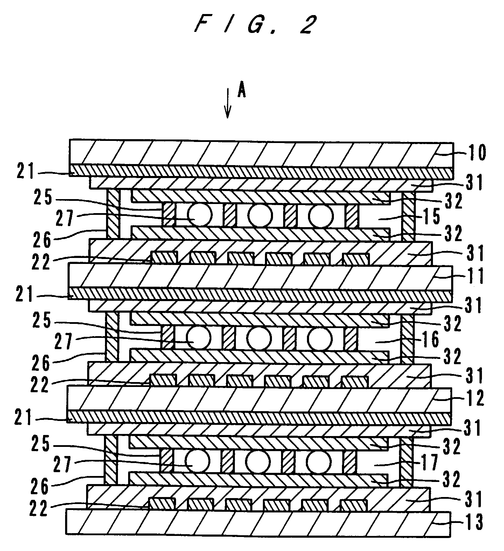

### Second Embodiment of Liquid Crystal Display; See Fig. 2

Fig. 2 shows a second embodiment of a liquid crystal display according to the present invention. In the liquid crystal display, three liquid crystal light control layers 15, 16 and 17 and four substrates 10, 11, 12 and 13 are laminated alternately. Between two substrates which face each other with a liquid crystal light control layer in-between, resin nodules 25 for joining and supporting the substrates in a displaying area and spacers 27 for keeping a gap between the substrates are provided.

The differences of this liquid crystal display from the conventional liquid crystal display shown by Fig. 35 are that the number of substrates are not six but four and that the inner substrates 11 and 12 have necessary layers and/or resin nodules on the respective both surfaces. In other words, in this second embodiment, one substrate replaces a combination of a substrate, an adhesive layer and another substrate in the conventional liquid crystal display.

In the second embodiment, the three substrates other than the lowermost substrate 13 are transparent. Here, being transparent means not only to transmit light in the entire visible spectrum evenly but also to transmit light in a specified wavelength range selectively.

Usable transparent film type substrates are polycarbonate, polyether sulfone, polyalylate, cyclic amorphous polyorefine, etc.

Using film type substrates is effective to produce a light and thin liquid crystal display. Moreover, the flexibility of film type substrates permits a process of laminating a plurality of substrates while filling liquid crystal among the substrates, which improves the efficiency of manufacture.

On the other hand, using film type substrates and glass substrates in combination results in manufacture of strong liquid crystal displays in an easy way with less defects. For example, glass substrates may be used as the uppermost and the lowermost substrates, and film type substrates may be used as the inner substrates. In this case, if the number of liquid crystal light control layers is n, n-1 film type substrates are necessary.

An ordinary film type substrate has a gas barrier layer so as to inhibit penetration of air. However, the two inner substrates 11 and 12 face liquid crystal light control layers on their respective both surfaces and are not exposed to the outer air, and therefore, film type substrates with no gas barrier layers may be used as the inner substrates.

On the substrates 10 through 13, transparent electrodes 21 and 22 are formed so as to permit application of a voltage to the liquid crystal light control layers 15 through 17. More specifically, on the surfaces of the uppermost and the lowermost substrates 10 and 13 which face the liquid crystal light control layers 15 and 17 and on the respective both surfaces of the substrates 11 and 12 which are located among the liquid crystal light control layers 15 through 17, the electrodes 21 and 22 made of ITO are provided. The electrodes 21 and 22 may not be necessarily made of ITO and may be made of a metal, e.g., aluminum, silicon or the like or may be made of a photoconductive film, e.g., amorphous silicon, BSO or the like.

The electrodes 21 and 22 formed on the respective both surfaces of the substrates 11 and 12 are of a strip pattern composed of a plurality of strips extending in parallel to each other. Electrodes formed on both surfaces of a substrate may be arranged in the same pattern and may be arranged in mutually different patterns. Fig. 2 shows an example in which electrodes formed on both surfaces of a substrate are arranged in mutually different patterns.

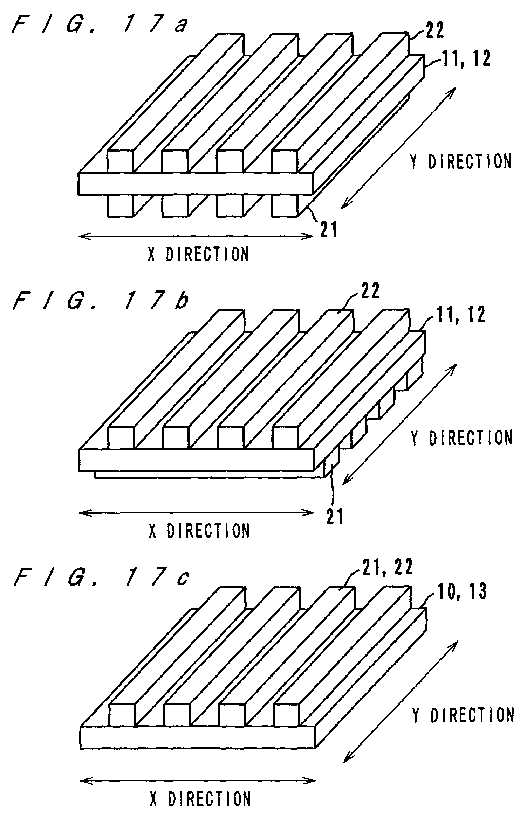

Figs. 17a and 17b are schematic views of substrates with strip-like electrodes on the respective both surfaces. Fig. 17a shows a substrate which has electrodes of the same pattern on both surfaces, and Fig. 17b shows a substrate which has electrodes of mutually different patterns on both surfaces. Here, the statement "having electrodes of the same pattern" is about the electrode pattern within a displaying area. Differences which may exist in pattern of drawing the electrodes from the displaying area, in other words, in electrode pattern in the periphery of the displaying area are not considered. In a case like Fig. 17a, in the periphery of the displaying area, the electrode patterns on both surfaces may be mutually different in widths of the electrodes and in intervals among the electrodes.

As an example of differentiating the electrode patterns on both surfaces of a substrate, on one surface, strip-like electrodes are arranged in parallel, and on the other surface, this arrangement of electrodes is rotated on a plane. In the example shown by Fig. 17b, the extending direction of the electrodes 21 and the extending direction of the electrodes 22 are perpendicular to each other, that is, the same arrangement is rotated at 90 degrees. This brings an advantage that the substrate will be less likely to bend or curve.

The four substrates 10 through 13 with electrodes 21 and 22, whether the electrodes 21 and 22 are arranged like the example of Fig. 17a, Fig. 17b or Fig. 17c, are laminated in such a way that the electrode patterns which sandwich a liquid crystal light control layer are perpendicular to each other and that the substrates are in parallel to each other. Thereby, the intersections of the electrodes which sandwich a liquid crystal light control layer serve as pixels.

Alternatively, an active matrix type electrode structure, which comprises a plurality of pixel electrodes and thin film transistors connected to the respective pixel electrodes, can be adopted.

Further, the electrodes 21 and 22 can also function as markers for positioning of substrates during lamination of the substrates, for confirmation of the accuracy of lamination, for recognition of the upper surface and the lower surface of each substrate, for positioning of drawn portions of the electrodes and for punching as well as means for permitting application of a voltage to the liquid crystal light control layers. Needless to say, for these purposes, markers may be provided on the substrates.

On the electrodes 21 and 22 formed on the substrates 10 through 13, insulating layers 31 are provided according to the necessity. The thickness of the insulating layers 31 is not particularly specified. As the material of the insulating layers 31, polyimide, polyamide, polyvinyl alcohol, polyparaxylene, SiO₂, TiO₂, etc. are usable.

Between adjacent liquid crystal light control layers, a color filter layer which absorbs light within a specified wavelength range may be provided if necessary. Thereby, unnecessary scattering can be avoided, and the picture quality on the display can be improved.

The color filter layer may be provided in any position as long as it is between adjacent liquid crystal light control layers. For example, the color filter layer can be provided on the substrate located between the liquid crystal layers, whether under or on the electrodes formed thereon. Also, the substrate itself may be colored, or the electrodes, the insulating layer or the aligning layer provided on the substrate may be colored.

Especially in using cholesteric selective reflection type liquid crystal, between adjacent liquid crystal light control layers, a color filter which absorbs light of the wavelength range which is selectively reflected by the liquid crystal light control layer located closer to the light incidence side (shown by arrow "A") and transmits light of the wavelength range which is selectively reflected by the other liquid crystal light control layer located farther from the light incidence side is provided.

Any liquid crystal material for any mode can be used; for example, liquid crystal materials for a twisted nematic mode, for a super twisted nematic mode, for a cholesteric selective reflection mode, for a dynamic scattering mode, for a guest-host mode, for an ECB mode, for a phase transition mode, for a polymer dispersed type liquid crystal mode, for a ferrodielectric liquid crystal mode, for an anti-ferrodielectric liquid crystal mode, etc. are usable. In a case of the cholestric selective reflection mode, a coloring agent may be added to the liquid crystal material to control the reflection color.

On the surfaces of substrates which face each other with a liquid crystal light control layer in-between, alignment layers 32 are provided if necessary. A rubbing treatment is carried out on the alignment layers 32 if necessary.

In a liquid crystal display with a memory effect which uses selective reflection of liquid crystal in a cholesteric phase, in principle, it is not necessary to control the alignment of the liquid crystal. However, when alignment layers are provided, the liquid crystal obtains an anchoring effect, and the characteristics of liquid crystal display are prevented from changing as time goes by. In this case, it is not necessary to carry out a rubbing treatment on the aligning layers.

Further, in order to support and join two substrates which face each other with a liquid crystal light control layer in-between, resin nodules 25 are formed on the aligning layer 32 within the displaying area.

The resin nodules 25 may be made of thermoplastic resin, thermosetting resin or ultraviolet ray setting resin. As the thermoplastic resin, polyvinyl chloride resin, polyvinylidene chloride resin, polyvinyl acetate resin, polymethacrylate resin, polyester acrylic resin, polystyrene resin, polyamide resin, polyethylene resin, polyurethane resin, polypropyrene resin, fluororesin, polyacrylonitrile resin, polyvinyl ether resin, polyvinyl ketone resin, polyether resin, polycarbonate resin, polyether chlorine resin, polyvinyl pyloridone resn, saturated polyester resin, etc. can be named. One of these kinds of resin may be used by itself, or some of these kinds may be used in combination. As the thermosetting resin, epoxy resin, phenol resin, polyester resin, polyimide resin, polyamide resin, silicone resin, etc. can be named, and as the ultraviolet ray setting resin, acrylic resin and methacrylic resin can be named. One of these kinds of resin may be used by itself, or some of these kinds may be used in combination. It is also possible to use a mixture of thermoplastic resin, thermosetting resin and ultraviolet ray setting resin. Because of the resin nodules 25 formed within the displaying area, the substrates adhere to each other on a larger area, which results in producing a liquid crystal display which is strong against shock and vibration.

The color of the resin nodules 25 is not specified. If the resin nodules 25 are black, the black in a displayed picture will be clear. If the resin nodules 25 are transparent, the transmittance of the liquid crystal display will be heightened, and a displayed picture will be bright.

In order to keep an even gap between two substrates in each liquid crystal cell after lamination of substrates, spacers 27 are mixed in a liquid crystal light control layer between substrates. As the spacers 27, fixed type spacers as well as ordinary spacers can be used. In fixed type spacers, each particle is coated with resin, and by hardening the resin, the adhesion between the spacers and the substrates after lamination can be heightened. Thereby, even if the liquid crystal cell bends, the spacers will not move, and there is no fear that movement of the spacers may damage the substrates. As the resin coat of fixed type spacers, thermosetting resin, thermoplastic resin and ultraviolet ray setting resin are usable.

In order to prevent liquid crystal filled between two substrates from coming into contact with air and from leaking and in order to heighten the reliability of the liquid crystal display, a sealing wall 26 may be provided in the periphery of the displaying area according to the necessity. If the sealing wall 26 is made as a ring, intake of air into the liquid crystal light control layer, which possibly occurs when the pressure for lamination of substrates is released, can be avoided. In order to secure the evenness of the gap between substrates, spacers may be mixed in the sealing wall 26 beforehand. This is effective to control the thickness of the liquid crystal light control layer between the substrates when it is difficult to disperse spacers evenly in producing a large scale liquid crystal cell and when spacers cannot be sufficiently dispersed on the sealing wall 26.

If a method in which substrates are laminated simultaneously with filling of liquid crystal between the substrates is adopted, the ring sealing wall 26 is effective to prevent the liquid crystal from leaking and to avoid intake of air into the liquid crystal. On the other hand, if a method in which liquid crystal is filled after lamination of substrates is adopted, an opening is made in the ring sealing wall 26 so that liquid crystal can be injected through the opening, and the opening is closed after the injection of liquid crystal.

The sealing wall 26 is made of thermoplastic resin, thermosetting resin and ultraviolet ray setting resin. Specifically, the kinds of resin which were named as the usable materials of the resin nodules 25 are also usable as the sealing resin, and some of the materials may be used in combination. If the resin nodules 25 and the sealing wall 26 are made of the same kind of resin, the production efficiency can be improved, and the cost can be lowered.

Moreover, the uppermost substrate 10 may have an anti-reflecting characteristic or have an anti-reflecting layer. In this case, a process for antireflection, a process for ultraviolet ray cutting or a process for antiglare may be carried out to the substrate itself, or a substrate with an anti-reflecting layer, a ultraviolet ray cutting layer or an anti-glaring layer on its surface may be used. The substrate may have two or more of these three characteristics.

In a cholesteric selective reflection type liquid crystal display, a light absorbing layer is provided under the lowermost liquid crystal light control layer 17. A color substrate with a light absorbing layer may be used as the lowermost substrate 13.

If a reflecting film or a reflecting/scattering film is used as the lowermost substrate 13, a reflective type or a reflective/translucent type liquid crystal display can be produced. Using a reflecting film or a reflecting/scattering film as the lowermost substrate 13 eliminates a process of sticking such a film to a liquid crystal cell and promotes thinning of the liquid crystal display. Further, the elimination of the sticking process results in preventing the liquid crystal display from being contaminated, being provided with finger prints and keeping bubbles inside, which may occur during the sticking process.

Also, if a polarizing film or a retardation film is used as the lowermost substrate 13, a process of sticking such a film to a liquid crystal cell can be eliminated, and the liquid crystal display can be made thinner. The elimination of the sticking process results in preventing the liquid crystal display from being contaminated, being provided with finger prints and keeping bubbles inside, which may occur during the sticking process.

Liquid crystal containing a dichroic dye or nematic liquid crystal may be contained in any one of the liquid crystal light control layers so that the liquid crystal light control layer will also function as a polarizing film or a retardation film. In this case, on the surfaces of the substrates which are in contact with this liquid crystal light control layer, electrodes are not necessary.

An adaptable method to produce such a liquid crystal display is a method in which the substrates are laminated one by one to make a panel, and thereafter liquid crystal is vacuum injected into the panel. In this method, first, spacers for keeping the gaps among the substrates and resin nodules for supporting and joining the substrates are provided on the substrates, and on specified surfaces of the substrates, transparent electrodes, insulating layers, aligning layers (with a rubbing treatment if necessary) and sealing walls for prevention of liquid crystal leakage are provided according to the necessity.

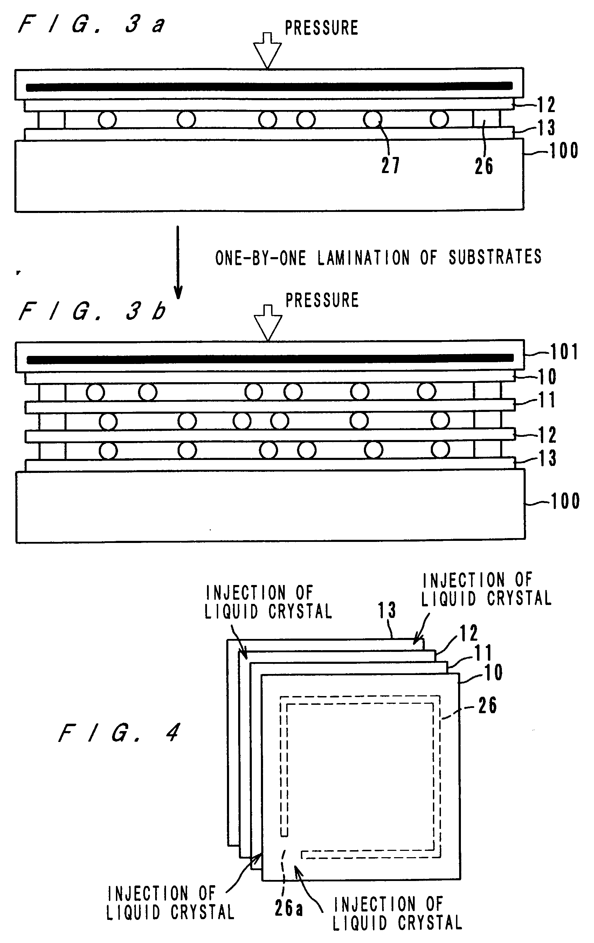

As Fig. 3a shows, a first substrate 13 with necessary electrodes and polymeric layers is fixed on a planar stage 100, and a second substrate 12 is placed on the substrate 13 by a movable substrate holder (not shown) while being positioned correctly by use of markers provided on the substrates 12 and 13. Then, on these substrates, a third substrate 11 and a fourth substrate 10 are placed in order in the same manner, and as Fig. 3b shows, the stacked substrates 10 through 13 are pressed by a heat presser 101 to be bonded into a laminate.

Thereafter, as Fig. 4 shows, liquid crystal is vacuum injected to among the substrates through liquid crystal injection ports 26a made in the sealing walls 26 (in Fig. 4, only the sealing wall 26 provided on the uppermost substrate 10 and the injection port 26a made therein are shown). After the injection of liquid crystal, the injection ports 26a are closed.

Thus, a method in which after laminating substrates, liquid crystal is vacuum injected to among the substrates can be adopted. This method is adaptable to substrates of all kinds including glass substrates and film type substrates. This method is adaptable whether both glass substrates and film type substrates are used or only film type substrates are used.

Other adaptable methods to produce such a liquid crystal display are methods which were disclosed by the applicants in U.S. Serial No. 09/309,127. In one of the methods, by using a laminating device, a substrate is placed on and joined to another substrate by adhesion while liquid crystal is being filled between the substrates, and in this way, liquid crystal cells are made and stacked one by one. In the other method, a plurality of substrates are placed one upon another and are joined together while liquid crystal is filled among the substrates, and in this way, a plurality of liquid crystal cells are produced and laminated at one time.

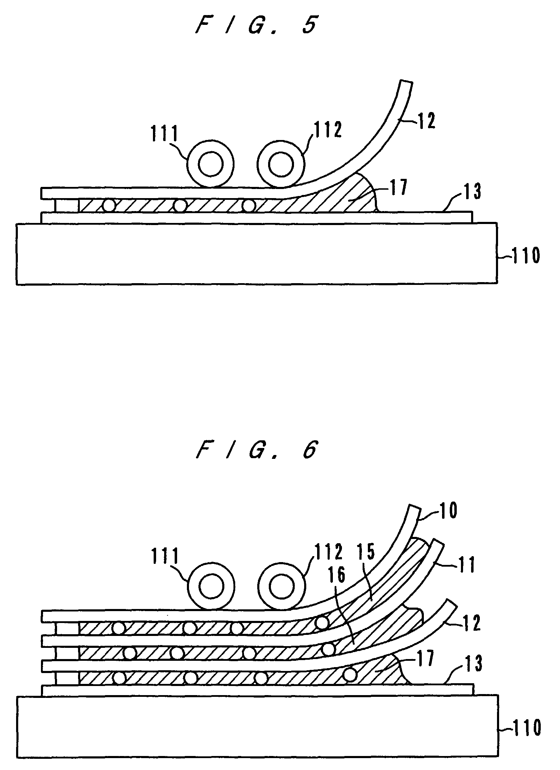

Now, as a first exemplary method of laminating flexible substrates, a method in which liquid crystal cells are produced and stacked one by one is described. Fig. 5 schematically shows the way how a substrate is placed on and joined to a substrate fixed on a stage by use of the laminating device disclosed in U.S. Serial No. 09/309,127.

On the substrates, spacers, resin nodules and sealing walls were formed, respectively, and on necessary surfaces of the substrates, transparent electrodes, insulating layers and aligning layers (with a rubbing treatment if necessary) were formed beforehand.

Thus, substrates with necessary layers thereon are laminated by use of the laminating device. First, a first substrate 13 is fixed on a planar stage 110 of the laminating device. Thereafter, liquid crystal is coated on the substrate 13, and a second substrate 12 is fastened to a movable substrate holder (not shown). The movable holder is moved to place the second substrate 12 on the first substrate 13 correctly by using the markers on the substrates 12 and 13, and the substrate 12 is pressed by a pressing roller 111. Subsequently, the resin nodules and the sealing wall are heated and crushed by the heating/pressing roller 112 to become of a height corresponding to the gap between the substrates. Thus, the substrates 12 and 13 are stacked and joined together with the thickness of the cell regulated to be even and with bubbles prevented from entering the cell. By repeating this process of joining two substrates while filling liquid crystal between the substrates, further, a third and a fourth substrates are stacked one by one, and in this way, a laminate type liquid crystal display can be produced.

As a second exemplary method of laminating flexible substrates, a method in which a plurality of substrates are stacked and joined together to make a plurality of liquid crystal light control layers at one time is described. Fig. 6 schematically shows the way how substrates are stacked and joined in this method.

A first substrate 13 is fixed on a movable planar stage 110, and other three substrates 10, 11 and 12 are fastened to movable substrate holders (not shown). The substrate holders are moved to place the substrates 10, 11 and 12 correctly on the substrate 13 by using the markers on the substrates 10 through 13, and the four substrates are pressed simultaneously by a pressing roller 111 against the planar stage 110. Liquid crystal is dropped from three liquid crystal dispensers provided on the substrate holders, and thereafter, the planar stage 110 is slid so that the liquid crystal dropped among the substrates can be spread by pressure from a heating/pressing roller 112 without taking bubbles in.

In this way, a laminate type liquid crystal display can be produced by laminating a plurality of substrates simultaneously while filling liquid crystal among the substrates. In this second exemplary method, the substrate which is fixed on the planar stage 110 may be a glass substrate or a film type substrate, and this method is also adaptable to a case of producing a liquid crystal display using a glass substrate and film type substrates.

Further, in another adaptable method, an intermediate liquid crystal cell is made, and thereafter, substrates are placed on the upper and the lower surfaces of the liquid crystal cell while liquid crystal is being filled among the substrates and the liquid crystal cell. Also, in another adaptable method, two cells, each of which has a liquid crystal light control layer between substrates, are made, and thereafter, the two cells are stacked and joined together while liquid crystal is being filled in-between. The electrodes and the polymeric layers to be provided on the substrates are not necessarily formed thereon before the laminating process, but it is possible to form such electrodes and polymeric layers during the laminating process.

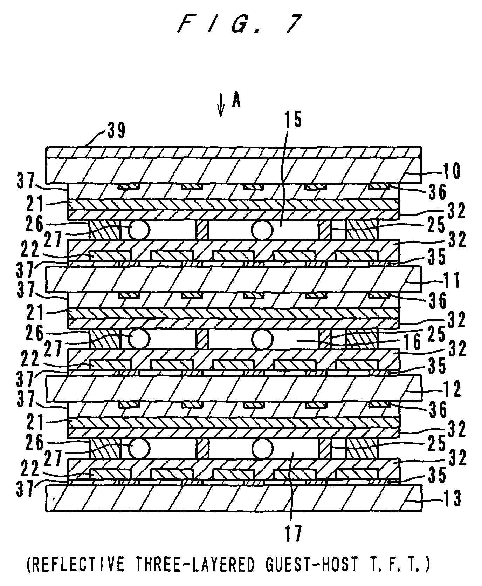

### Third Embodiment of Liquid Crystal Display; See Fig. 7

As Fig. 7 shows, the third embodiment is a reflective type three-layered guest-host TFT liquid crystal display. A specific example which was produced by the inventors is hereinafter described.

As the uppermost substrate 10, a polycarbonate (PC) substrate was used, and as the other substrates 11, 12 and 13, 7059 glass (made by Corning Incorporated) was used. On the upper surfaces of the glass substrates 11, 12 and 13, scanning lines, signal lines, pixel electrodes (none of them are shown), and TFT elements were formed. The pixel electrodes were formed to be coupled with the respective pixels arranged in a matrix. The scanning lines were formed to be parallel to each other in the horizontal direction of the screen with each of the scanning lines covering one row of pixels. The signal lines were formed to be perpendicular to the scanning lines with each of the signal lines covering one column of pixels. The scanning lines, the signal lines and the pixel electrodes were connected to one another by the TFT elements 35. The pixel electrodes were of a width of 300 µ m and a length of 300 µ m. Aligning layers 32 with a rubbing treatment which were made of AL4552 (made of JSR Co., Ltd.) to have a thickness of 400 Å were formed entirely on the surfaces of the glass substrates 11, 12 and 13 on which the TFT elements 35 were formed.

On the respective lower surfaces of the substrates 10, 11 and 12, black matrixes 36 were formed so as to prevent the TFT elements 35 from being irradiated. Each of the black matrixes 36 was formed of a pigment dispersed type black resist PD-170K (made by Hitachi Kasei Kogyo Co., Ltd.) into a lattice to enclose the respective pixels. On the respective black matrixes 36, flattening layers 37 were formed of AC-8199 (made by Nissan Kagaku Kogyo Co., Ltd.). On the flattening layers 37, ITO electrodes 21 were formed to have a thickness of 700 Å. Further, on the ITO electrodes 21, aligning layers 32 with a rubbing treatment were formed of AL4552 (made by JSR Co., Ltd.).

The gaps among the substrates were 5 µ m, and in each of the gaps, resin nodules 25 were made of thermoplastic resin STAYSTICK371G (made by Techno Alpha Co., Ltd.). The resin nodules 25 were columns with a diameter of 40 µ m and a height of 5 µ m arranged at a pitch of 300 µ m. Further, thermoplastic resin coated fixed type spacers 27 with particle diameter of 5 µ m (N3M14 made by Ube Nitto Kasei Kogyo Co., Ltd.) were dispersed at a density of approximately 200 particles per 1mm².

As the uppermost liquid crystal light control layer 15, a liquid crystal material which was prepared by dissolving a yellow dichroic dye in nematic liquid crystal ZLI-1565 (made by Merck & Company) at 2% was used. As the intermediate liquid crystal light control layer 16, a liquid crystal material which was prepared by dissolving a magenta dichroic dye to nematic liquid crystal ZLI-1565 at 3% was used. As the lowermost liquid crystal light control layer 17, a liquid crystal material which was prepared by dissolving a cyan dichroic dye to nematic liquid crystal ZLI-1565 at 3% was used. After these materials were injected into the respective spaces among the substrates, the injection ports were sealed by ultraviolet ray setting resin Photoleck A-704-60 (made by Shimizu Finechemical Co., Ltd.).

On the uppermost substrate 10, a polarizing film 39 was stuck.

The three-layered guest-host TFT liquid crystal display of this structure was capable of displaying a motion picture, and the display performance was high.

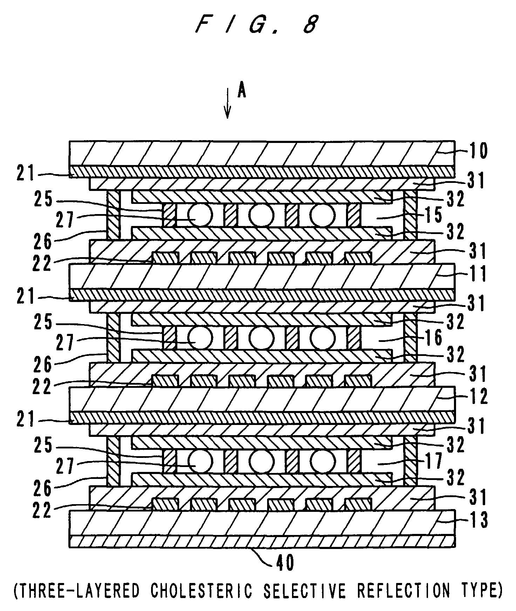

### First Example of Fourth Embodiment of Liquid Crystal Display; See Fig. 8

As Fig. 8 shows, the fourth embodiment is a three-layered cholesteric selective reflection type liquid crystal display. A first example which was produced by the inventors is hereinafter described.

As the uppermost substrate 10 and the lowermost substrate 13, 7059 glass substrates (made by Corning Incorporated) were used, and as the inner substrates 11 and 12, polycarbonate (PC) substrates were used. ITO electrodes 21 and 22 were formed on the lower surface of the substrate 10, on the upper surface of the substrate 13 and on the respective both surfaces of the substrates 11 and 12. As Fig. 17b shows, the ITO electrodes 21 and 22 were formed to be strips extending in parallel to each other on each surface with the electrode pattern on one surface of a substrate and the electrode pattern on the other surface of the same substrate being perpendicular to each other. The strip-like electrodes were of a width of 300 µ m. On all the surfaces of the substrates other than the surfaces of the substrates 10 and 13 which are not in contact with any liquid crystal light control layers, insulating layers 31 and aligning layers 32 (AL4552 made by JSR Co., Ltd.) were formed. The substrates were laminated in such a way that the ITO electrodes 21 and 22 formed on the surfaces of the substrates which sandwich a liquid crystal light control layer would be perpendicular to each other and that the substrates would be in parallel to each other.

Cholesteric liquid crystal materials of a selective reflection type which selectively reflect light of red, light of green and light of blue, respectively were filled as the lowermost liquid crystal light control layer, as the intermediate liquid crystal light control layer and as the uppermost liquid crystal light control layer, respectively. Specifically, as the material for the lowermost liquid crystal light control layer, cholesteric liquid crystal which selectively reflects light of around 680nm (which was prepared by adding a chiral agent CB15 made by Merck & Company to nematic liquid crystal BL46 made by Merck & Company at 32.6wt%) was used. As the material for the intermediate liquid crystal light control layer, cholesteric liquid crystal which selectively reflects light of around 550nm (which was prepared by adding a chiral agent CB15 made by Merck & Company to nematic liquid crystal BL46 made by Merck & Company at 40wt%) was used. As the material for the uppermost liquid crystal light control layer, cholesteric liquid crystal which selectively reflects light of around 480nm (which was prepared by adding a chiral agent CB15 made by Merck & Company to nematic liquid crystal BL46 made by Merck & Company at 47.6wt%) was used.

Among the substrates, thermoplastic resin coated fixed type spacers 27 with a particle diameter 7 µ m (N3M14 made by Ube Nitto Kasei Kogyo Co., Ltd.) were dispersed at a density of approximately 200 particles per 1mm². Also, columnar resin nodules 25 made of polyester resin PES-360S30 (made by Three Bond Co., Ltd.) were formed to be of a diameter of approximately 40 µ m and of a height of 7 µ m and to be arranged in a lattice at a pitch of 300 µ m. Further, sealing walls 26 with injection ports were formed of the polyester resin PES-360S30 among the substrates. The injection ports were closed by ultraviolet ray setting resin Photolek A-704-60 (Sekisui Finechemical Co., Ltd.) after the liquid crystal materials were injected.

On the lower surface of the lowermost substrate 13, a light absorbing layer 40 coated with a black coloring was provided.

The three-layered cholestric selective reflection type liquid crystal display of this structure was light. In this liquid crystal display, unnecessary reflection among the substrates, which has been a problem in conventional liquid crystal displays of this type, could be suppressed, and the reflection rate was high. Further, a display of high quality and with a larger angle of field was achieved.

### Second Example of Fourth Embodiment of Liquid Crystal Display; See Fig. 8

A second example of the three-layered cholesteric selective reflection type liquid crystal display shown by Fig. 8 is hereinafter described. The difference of the second example from the above-described first example is that mutually different aligning layers 32 are provided for the liquid crystal light control layers 15, 16 and 17.

In the first example, AL4552 (made by JSR Co., Ltd.) was used for all the aligning layers 32. In the second example, for the aligning layers 32 which are in contact with the liquid crystal red light control layer 17, AL4552 (made by JSR Co., Ltd.) was used; for the aligning layers 32 which are in contact with the liquid crystal green light control layer 16, AL3408 (made by JSR Co., Ltd.) was used; and for the aligning layers 32 which are in contact with the liquid crystal blue light control layer 15, SE-1211 (made by Nissan Chemical Industries) which causes vertical alignment was used. The other parts were made of the same materials into the same structures as those of the first example.

The first example and the second example were compared with each other in angle of field, and the results are shown by Table 1. As is apparent from Table 1, the second example which uses mutually different aligning layers for the respective liquid crystal light control layers had a larger angle of field, and thus, a display with high contrast could be obtained. Here, the angle of field means the range wherein the contrast is at least 5:1.

**Table 1**

| | Vertical Direction | Lateral Direction |
|---|---|---|
| First Example | 70 degrees | 70 degrees |
| Second Example | 110 degrees | 110 degrees |

### Third Example of Fourth Embodiment of Liquid Crystal Display; See Fig. 8

A third example of the three-layered cholesteric selective reflection type liquid crystal display shown by Fig. 8 is hereinafter described. The difference of the third example from the above-described first example is that thermosetting resin was used for the resin nodules 25.

In the third example, in order to form the resin nodules 25, thermosetting resin XN-21-S (made by Mitsui Chemical Co., Ltd.) was printed by screen printing. A screen film with a thickness of 25 µ m which has resin transmitting portions which are of a diameter of 40 µ m and are arranged at a pitch of 600 µ m was used, and by use of a large-scale printing machine FZ-36-1020 (made by Murakami Co., Ltd.), printing was carried out. The temperature and the humidity during the printing process were controlled. The temperature was regulated to 25°C all the time during the substrate laminating process. By heat and pressure during the laminating process, the resin nodules were crushed to have a height of 7 µ m which is equal to the diameter of the spacers 27. After the laminating process, the laminate of substrates was exposed to heat of 150°C, and thereby, the resin nodules were perfectly hardened and joined the substrates together with liquid crystal light control layers among the substrates.

The third example which has resin nodules 25 made of thermosetting resin was highly reliable against heat, and the substrates were supported and joined securely with liquid crystal light control layers in-between. When a voltage was applied, the third example showed sufficiently high display performance.

### Fourth Example of Fourth Embodiment of Liquid Crystal Display; See Fig. 8

A fourth example of the three-layered cholesteric selective reflection type liquid crystal display shown by Fig. 8 is described. The difference of the fourth example from the above-described first example is that ultraviolet ray setting resin was used for the resin nodules 25.

In the fourth example, as the resin nodules 25, ultraviolet ray setting resin TB-3025B (made by Three Bond Co., Ltd.) was printed by screen printing. A screen film with a thickness of 25 µ m which has resin transmitting portions which are of a diameter of 40 µ m and are arranged at a pitch of 600 µ m was used, and by use of a large-scale printing machine FZ-36-1020 (made by Murakami Co., Ltd.), printing was carried out.

By heat and pressure during the laminating process, the resin nodules were crushed to have a height of 7 µ m which is equal to the diameter of the spacers 27. After the laminating process, the laminate of substrates was sandwiched between transparent hard films, and a load of 3.5kg/cm² was applied thereto. In this state, ultraviolet rays were radiated at 200mj/cm² , and thereby, the resin was hardened.

By making resin nodules 25 of ultraviolet ray setting resin, the time for producing a liquid crystal display could be shortened, and the produced liquid crystal display had a high reliability, that is, the substrates were supported and joined securely with liquid crystal light control layers in-between. When a voltage was applied thereto, the liquid crystal display showed a sufficiently high display performance.

### Fifth Example of Fourth Embodiment of Liquid Crystal Display; See Fig. 8

A fifth example of the three-layered selective reflection type liquid crystal display is described. In the fifth example, an anti-reflecting layer was formed on the upper surface of the uppermost substrate 10. Thereby, reflection on the display surface could be suppressed, and it was easier to see the display.

The uppermost substrate 10 may be an anti-reflecting sheet. In this case, the effect of suppressing reflection can be obtained while a process of forming an anti-reflecting layer on the substrate 10 or a process of sticking an anti-reflecting sheet to the substrate 10 can be omitted. Moreover, there is no fear that an error may occur in forming an anti-reflecting layer or in sticking an anti-reflecting sheet to the substrate 10, and the productivity can be improved.

Also, by carrying out a process for ultraviolet ray cutting or a process for antiglare onto the upper surface of the uppermost substrate 10, the display performance of the liquid crystal display can be improved. If a substrate on which a ultraviolet ray cutting layer was formed beforehand or a substrate on which a process for antiglare was carried out beforehand is used as the uppermost substrate 10, the ultraviolet ray cutting effect or the antiglare effect can be obtained while processes of forming or sticking these layers onto the substrate 10 can be omitted. Further, there is no fear that an error may occur in these processes, and the productivity can be improved. Also, a substrate which has at least two characteristics of ultraviolet ray cutting, antiglare and antireflection is used as the uppermost substrate 10, the same effect can be obtained.

### Sixth Example of Fourth Embodiment of Liquid Crystal Display; See Fig. 8

A sixth example of the three-layered cholesteric selective reflection type liquid crystal display shown by Fig. 8 is described. In the sixth example, a substrate which has a characteristic of absorbing light was used as the lowermost substrate 13 instead of forming a light absorbing layer 40 on the lower surface of the substrate 13.

Specifically, a substrate which had been processed to have a light absorbing characteristic beforehand was used as the lowermost substrate 13, and patterning of ITO electrodes, dispersion of spacers and formation of resin nodules were carried out on the substrate 13. Thus, a process of forming light absorbing layer could be omitted, and the productivity could be improved.

Also, instead of forming a light absorbing layer, it is possible to use a liquid crystal material containing a black dye as the lowermost liquid crystal light control layer.

The light absorbing performance of the lowermost substrate 13 was sufficient, and sufficient display performance with high contrast could be obtained.

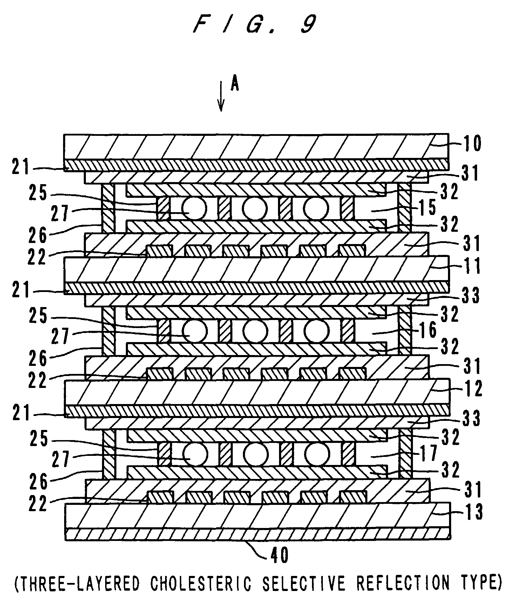

### Fifth Embodiment of Liquid Crystal Display; See Fig. 9

As Fig. 9 shows, the fifth embodiment is a three-layered cholesteric selective reflection type liquid crystal display and is basically of the same structure as the fourth embodiment shown by Fig. 8. The difference is that color filter layers 33 are provided between the liquid crystal light control layers 15 and 16 and between the liquid crystal light control layers 16 and 17. A specific example which was produced by the inventors is hereinafter described.

As the uppermost substrate 10 and the lowermost substrate 13, 7059 glass substrates (made by Corning Incorporated) were used, and as the inner substrates 11 and 12, polyester sulfone (PES) substrates were used. Transparent electrodes 21 and 22 were formed on the lower surface of the substrate 10, on the upper surface of the substrate 13 and on the respective both surfaces of the substrates 11 and 12. As Fig. 17b shows, the ITO electrodes 21 and 22 were formed to be strips extending in parallel to each other on each surface with the electrode pattern on one surface of a substrate and the electrode pattern on the other surface of the same substrate being perpendicular to each other. The strip-like electrodes were of a width of 300 µ m. On the lower surface of the substrate 10, on the upper surface of the substrate 11, on the upper surface of the substrate 12 and on the upper surface of the substrate 13, insulating layers 31 (PC335 made by JSR Co., Ltd.) were formed entirely.

A color filter layer 33 was formed of CFPR-EX-2 (made by Tokyo Ohka Kogyo Co., Ltd.) entirely on the lower surface of the substrate 11 to absorb light of blue and transmit light of green and light of red. A color filter layer 33 was formed CFPR-R-ST100 (made by Tokyo Ohka Kogyo Co., Ltd.) entirely on the lower surface of the substrate 12 to absorb light of blue and light of green and transmit light of red.

Aligning layers, liquid crystal, spacers, resin nodules, sealing walls, a light absorbing layer which are of the same materials and structures as those of the fourth embodiment were provided on or among the substrates.

The three-layered cholesteric selective reflection type liquid crystal display with color filter layers 33 made a display with higher contrast than the liquid crystal display according to the fourth embodiment.

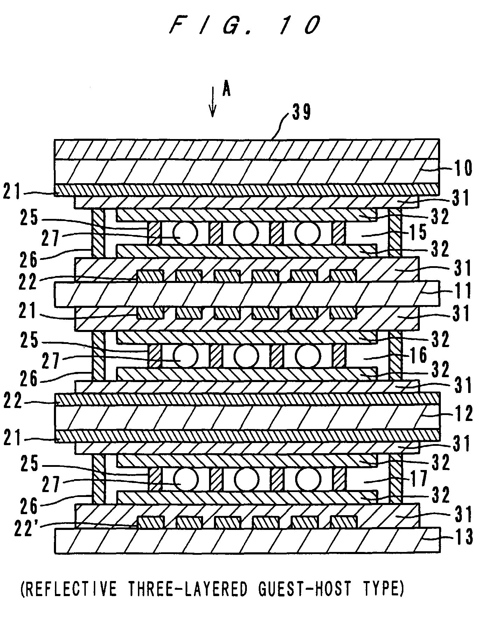

### First Example of Sixth Embodiment of Liquid Crystal Display; See Fig. 10

As Fig. 10 shows, the sixth embodiment is a reflective three-layered guest-host type liquid crystal display. A first example of the sixth embodiment which was produced by the inventors is hereinafter described.

As the substrates 10 through 13, polyether sulfone (PES) substrates were used. On the lower surface of the uppermost substrate 10, transparent electrodes 21 were formed, and on the upper surface of the lowermost substrate 13, reflective electrodes 22', not transparent electrodes, were formed. On the respective both surfaces of the inner substrates 11 and 12, as Fig. 17a shows, transparent electrodes 21 and 22 were formed to be strips extending in parallel to each other on each surface with the electrode patterns on both surfaces of a substrate being identical with each other. The strip-like electrodes were of a width of 300 µ m.

These four PES substrates 10 through 13 were laminated in such a way that the electrodes 21 and 22 which extend in parallel on the respective surfaces would be perpendicular to each other with liquid crystal light control layers thereamong and that the substrates would be in parallel to each other. On the lower surface of the substrate 10, on the respective both surfaces of the substrates 11 and 12 and on the upper surface of the substrate 13, insulating layers 31 (PC335 made by JSR Co., Ltd.) were formed to cover the electrodes 21, 22 and 22' on the respective surfaces.

On the insulating layers 31, aligning layers 32 (8302 made by Sumitomo Bakelite Co., Ltd.) were formed, and a rubbing treatment was carried out on the aligning layers 32.

Among the substrates 10 through 13, sealing walls 26 in the shape of a square ring were formed of epoxy thermosetting resin. The epoxy thermosetting resin was prepared by mixing Micropearl (made by Sekisui Finechemical Co., Ltd.) as spacers with its main component ERS-2200 and a hardening agent ERS-2820 (both made by Sumitomo Bakelite Co., Ltd.). In the spaces enclosed by the substrates and the sealing walls 26, liquid crystal is filled.

For the uppermost liquid crystal light control layer 15, a liquid crystal material which was prepared by dissolving yellow dichroic dye to nematic liquid crystal ZLI-1565 (made by Merck & Company) at 2% was used. For the intermediate liquid crystal light control layer 16, a liquid crystal material which was prepared by dissolving magenta dichroic dye to nematic liquid crystal ZLI-1565 (made by Merck & Company) at 3% was used. For the lowermost liquid crystal light control layer 17, a liquid crystal material which was prepared by dissolving cyan dichroic dye to nematic liquid crystal ZLI-1565 (made by Merck & Company) at 3% was used.

Among the substrates, thermoplastic resin coated fixed type spacers 27 with a particle diameter 8 µ m (N3M14 made by Ube Nitto Kasei Kogyo Co., Ltd.) were dispersed at a density of approximately 200 particles per 1mm². Also, columnar resin nodules 25 made of thermoplastic resin STAYSTICK (made by Techno Alpha Co., Ltd.) were formed to be of a diameter of approximately 40 µ m and of a height of 8 µ m and to be arranged in a lattice at a pitch of 300 µ m.

A polarizing film 39 was stuck on the upper surface of the uppermost substrate 10.

When a voltage was applied to the three-layered guest-host type liquid crystal display of this structure, a display of high quality could be attained.

Next, an exemplary method of producing this liquid crystal display is described. In this method, on one surface of a substrate, another substrate is placed while liquid crystal is filled between the substrates. In this way, the liquid crystal light control layers are formed one by one.

A PES substrate with ITO electrodes 21 patterned on one surface is prepared as the substrate 10, and a PES substrate with reflective electrodes 22' patterned on one surface is prepared as the substrate 13. Two PES substrates with ITO electrodes 21 and 22 patterned on the respective both surfaces are prepared as the substrates 11 and 12.

On the electrodes 22' of the substrate 13, an insulating layer 31 is formed by spin-coating in an area covering the displaying area and being larger than the displaying area, and the insulating layer 31 is exposed and developed. Thereafter, the substrate 13 is baked at 170°C for one hour and a half. After the baking, on the insulating layer 31, an aligning layer 32 is formed. The aligning layer 32 is formed by use of a roll coater in an area covering the displaying area but being smaller than the area of the insulating layer 31. Then, the substrate 13 is baked again in the same manner.

The substrates 11 and 12 are washed, and thereafter, on the respective both surfaces, insulating layers 31 are formed by spin-coating in areas covering the displaying area and being larger than the displaying area. The insulating layers 31 are exposed and developed, and thereafter, the substrates 11 and 12 are baked at 170°C for one hour and a half. After the baking, on the insulating layers 31, aligning layers 32 are formed. The aligning layers 32 are formed by use of a roll coater in areas covering the displaying area but being smaller than the area of the insulating layers 31. Then, the substrates 11 and 12 are baked for one hour and a half. After the baking, on the respective one surfaces of the substrates 11 and 12, resin nodules 25 are formed by screen printing on the aligning layers 32 on the insulating layers 31, and subsequently, fixed type spacers 27 with a particle diameter of 7 µ m are dispersed thereon. Then, the substrates 11 and 12 are baked at 150°C for one hour and a half. After the baking, on the respective surfaces of the substrates 11 and 12 on which the resin nodules 25 and the spacers 27 were provided, sealing walls 26 are formed by use of a dispenser or the like.

The substrate 10 is washed, and thereafter, on the surface with the electrodes 21, an insulating layer 31, an aligning layer 32, resin nodules 25 and a sealing wall 26 are formed, and spacers 27 are dispersed.

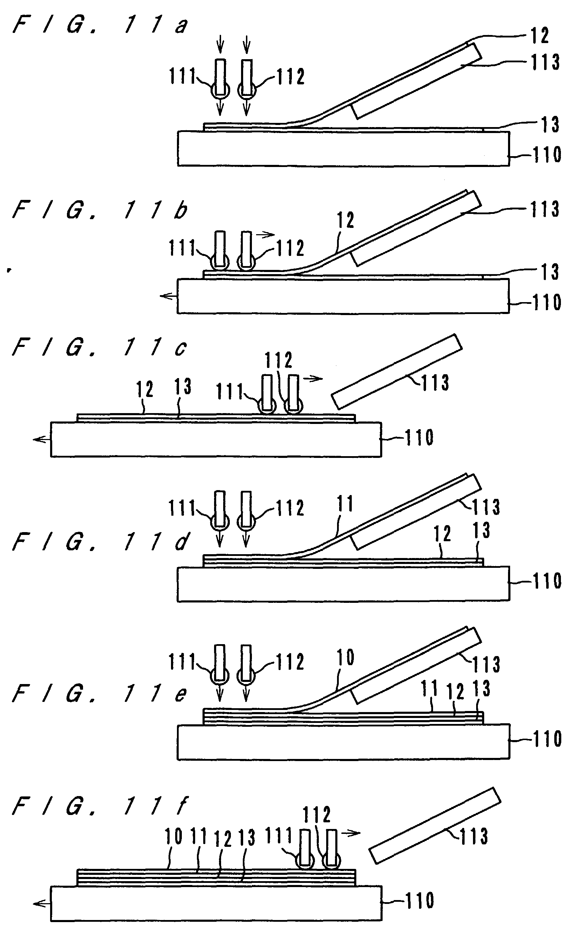

After the substrates 10 through 13 were processed in this way, as Fig. 11a shows, the substrate 13 is fixed on the planar stage 110 heated to 80°C by vacuum suction, and the other substrates are laminated thereon one by one. First, the substrate 12 is placed on the substrate 13. Immediately before the lamination, the substrate 12 is heated to 80°C for 18 minutes, and thereby, the sealing wall 26 becomes semi-hardened. In this state, the substrate 12 is fastened to a movable substrate holder 113. On the substrate 13, a liquid crystal material containing cyan dichroic dye is dropped from a liquid crystal dispenser (not shown) which is located at a side of the planar stage 110. Thereafter, the substrate holder 113 is moved to place the substrate 12 correctly on the substrate 13 by using the markers on the substrates 12 and 13, and the substrates 12 and 13 are pressed against the planar stage 110 by a pressing roller 111 (see Fig. 11b). Then, while the planar stage 110 is slid, the heating/pressing roller 112 heated to 155°C spreads the liquid crystal material between the substrate 12 and 13 without taking bubbles in between the substrates. (see Fig. 11c). At this time, the resin nodules located between the substrates 12 and 13 are crushed to a specified height, the gap between the substrates 12 and 13 is kept even by the spacers 27, and the substrates 12 and 13 are joined together by the resin nodules.

In the same way, on the substrate 12 laminated on the substrate 13, a liquid crystal material containing a magenta dichroic dye is dropped. Then, the substrate 11, the sealing wall formed thereon already semi-hardened by heat, is placed on the substrate 12. (see Fig. 11d).

In the same way, on the substrate 11 laminated on the substrates 12 and 13, a liquid crystal material containing a yellow dichroic dye is dropped. Then, the substrate 10, the sealing wall formed thereon already semi-hardened by heat, is placed on the substrate 11 (see Figs. 11e and 11f).

After the lamination of the substrates, a polarizing film 39 is stuck on the upper surface of the uppermost substrate 10.

### Second Example of Sixth Embodiment of Liquid Crystal Display; See Fig. 10

A second example of the reflective three-layered guest-host type liquid crystal display shown by Fig. 10 is described. The difference from the first example is that a method in which four polyether sulfone (PES) substrates 10 through 13 are laminated at one time was adopted, and the method is hereinafter described.

Transparent electrodes, insulating layers, aligning layers, spacers and resin nodules are formed/provided on the substrates in the same ways as described in connection with the first example. After the sealing walls formed on the respective substrates are semi-hardened by heat, the substrates 10 through 13 are laminated at one time while liquid crystal is filled among the substrates.

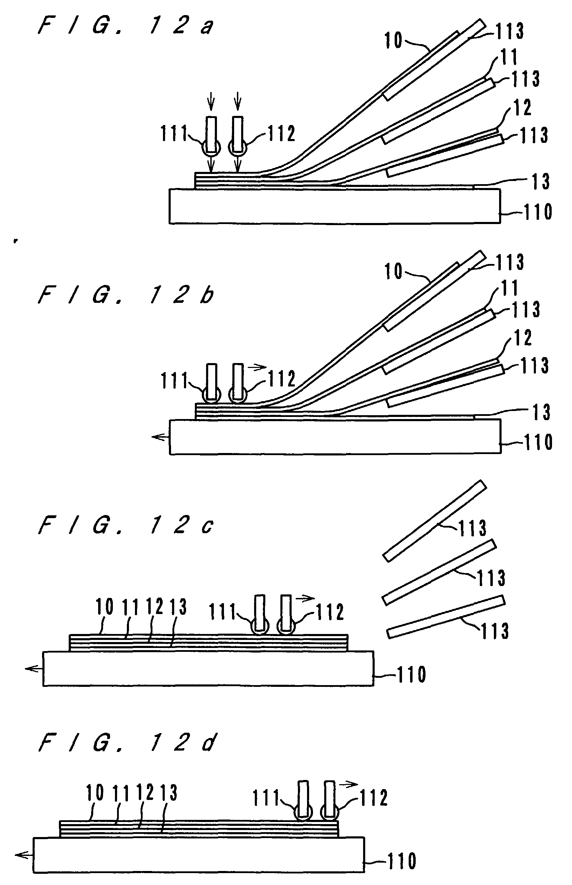

The laminating process is described more specifically referring to Figs. 12a through 12d. First, as Fig. 12a shows, a movable planar stage 110 which has vacuum sucking holes, a vacuum pump and a suction/release switch is heated to 80 °C, and the substrate 13 is positioned correctly thereon and fixed by vacuum suction. The other three substrates 12, 11 and 10 are fastened to movable substrate holders 113. The holders 113 are moved to place the substrates 12, 11 and 10 correctly on the substrate 13 by using the markers on the substrates 10 through 13, and the four substrates 10 through 13 are pressed by a pressing roller 111 against the planar stage (see Fig. 12b). In this state, liquid crystal materials are dropped from three liquid crystal dispensers (not shown) which are provided for the respective substrate holders 113. Thereafter, while the planar stage 110 is slid, a heating/pressing roller 112 heated to 155°C spreads the liquid crystal materials among the substrates without taking bubbles in among the substrates (see Figs. 12c and 12d).

After the lamination of substrates, a polarizing film 39 is stuck on the upper surface of the uppermost substrate 10.

### Third Example of Sixth Embodiment of Liquid Crystal Display; See Fig. 10

A third example of the reflective three-layered guest-host type liquid crystal display shown by Fig. 10. The difference from the first example is that thermoplastic resin was used for the sealing walls 26.

In this third example, as the sealing walls 26, thermosetting resin STAYSTICK 371G (made by Techno Alpha Co., Ltd.) was formed into square rings. In using thermoplastic resin as the sealing walls 26, the resin is softened by heat, and in this state, the substrates are laminated while being pressed. Then, while the pressure is kept applied, the substrates are cooled to room temperature, and thus, the lamination is completed. At this time, the substrates may be cooled whether forcibly (rapidly) or gradually.

In using thermoplastic resin as the sealing walls 26, the substrates are laminated in such a process; the duration of heating the substrates is short, and a reliable liquid crystal display can be produced even with using substrates which are weak against heat. The three-layered guest-host liquid crystal display of this structure did not have problems that the substrates peeled off and that the liquid crystal leaked out. The substrates were joined hard, and the liquid crystal display made a display of high quality.

### Fourth Example of Sixth Embodiment of Liquid Crystal Display; See Fig. 10

A fourth example of the reflective three-layered guest-host type iquid crystal display shown by Fig. 10 is described. The difference from the first example is that ultraviolet ray setting resin was used for the sealing walls 26.

In the fourth example, as the sealing walls 26, ultraviolet ray setting resin TB-3025B (made by Three Bond Co., Ltd.) was formed into square rings. After the laminating process, the laminate of substrates was sandwiched between transparent rigid films, and while a load of 3.5kg/cm² was applied to the laminate, ultraviolet rays were radiated at 3000mj/cm² to harden the ultraviolet ray setting resin.

By using ultraviolet ray setting resin as the sealing walls 26, the time for producing a liquid crystal display can be shortened, and the produced liquid crystal display is reliable. More specifically, there was no fear that liquid crystal may leak from the cells, and the substrates are joined hard. Also, it is not necessary to heat the substrates to produce the fourth example, and there is no fear that the substrates may be deformed by heat, resulting in avoiding pixel shift.

With respect to the reflective three-layered guest host type liquid crystal display with sealing walls 26 made of ultraviolet ray setting resin, the substrates were joined hard enough never to cause peel-off of the substrates, and when a voltage was applied to the liquid crystal display, a display of high quality was made.

### Fifth Example of Sixth Embodiment of Liquid Crystal Display; See Fig. 10

A fifth example of the reflective three-layered guest-host type liquid crystal display shown by Fig. 10 is described. The difference from the first example is that a polarizing film was used as the uppermost substrate 10 instead of sticking a polarizing film 39 on the upper surface of the substrate 10.

More specifically, on one surface of a polarizing film, ITO electrodes 21 were formed, and further an insulating layer, an aligning layer, spacers, resin nodules and a sealing wall were formed thereon. Using this polarizing film as the uppermost substrate 10 eliminates the necessity of providing an adhesive layer between the substrate 10 and the polarizing film 39 as shown by Fig. 10. Accordingly, a thinner liquid crystal display can be produced, and unnecessary scattering can be reduced. Also, a process of sticking a polarizing film on the substrate 10 can be eliminated, and there are no possibilities of contaminating the substrate 10, of giving finger prints thereon and of taking bubbles in during the sticking process. Thus, the productivity can be improved.

Instead of using a polarizing film, it is possible to contain a dichroic dye in the uppermost liquid crystal light control layer 15 so that the liquid crystal light control layer 15 will also function as a polarizer. In this case, the two substrates which sandwich the liquid crystal light control layer 15 containing a dichroic dye do not have to have electrodes on their respective surfaces which are in contact with the liquid crystal light control layer 15.

In the guest-host type liquid crystal display which uses a polarizing film as the uppermost substrate 10 and in the guest-host type liquid crystal display of which uppermost liquid crystal light control layer contains a dichroic dye, a display of high quality could be made.

### Sixth Example of Sixth Embodiment of Liquid Crystal Display; See Fig. 10

A sixth example of the reflective three-layered guest-host type liquid crystal display shown by Fig. 10 is described. The difference from the first example is that a reflective film was used as the lowermost substrate 13. In the sixth example, on the reflective film 13, reflective electrodes 22' were formed.

In the reflective three-layered guest-host liquid crystal display which uses a reflective film as the lowermost substrate 13 and has reflective electrodes 22' and an aligning layer 32 thereon, a bright display of a high reflection rate could be made. Moreover, the sixth example does not require a process of sticking a reflective film on the liquid crystal display, and there are no possibilities of contaminating the liquid crystal display, of giving finger prints thereon and of taking bubbles in during the sticking process. Thus, the productivity can be improved.

### Seventh Example of Sixth Embodiment of Liquid Crystal Display; See Fig. 10

A seventh example of the reflective three-layered guest-host type liquid crystal display shown by Fig. 10 is described. The difference from the first example is that polycarbonate (PC) substrates were used as the four substrates 10 through 13.

Electrodes 21 and 22 were formed on the respective one surfaces of the substrates 10 and 13. On the respective both surfaces of the substrates 11 and 12, electrodes 21 and 22 were formed in such a way that the electrode pattern on one surface of a substrate and the electrode pattern on the other surface of the same substrate are perpendicular to each other as shown by Fig. 17b. The electrodes were of a width of 300 µ m.

The other members, namely, the insulating layers 31, the aligning layers 32, the liquid crystal light control layers 15, 16 and 17, the spacers 27 and the resin nodules 25, etc. of the seventh example were of the same structures and of the same materials as those of the first example. By forming electrodes 21 and 22 on the PC substrates 11 and 12 in such a way that the electrode pattern on one surface of a substrate and the electrode pattern on the other surface of the same substrate are perpendicular to each other, possible pixel shifts which may occur in the substrate laminating process can be minimized. Thus, the seventh example could make a display of high quality.

### Eighth Example of Sixth Embodiment of Liquid Crystal Display; See Fig. 10

An eighth example of the reflective three-layered guest-host type liquid crystal display is described. In the eighth example, black resin was used for the resin nodules 25. The other members were of the same structures and the same materials as those of the first example. By providing black resin nodules 25 in the displaying area, black could be displayed more black, and a sharp display could be made.

### Ninth Example of Sixth Embodiment of Liquid Crystal Display; See Fig. 10

A ninth example of the reflective three-layered guest-host type liquid crystal display shown by Fig. 10 is described. In the ninth example, transparent resin was used for the resin nodules 25. The other members were of the same structures and of the same materials as those of the first example. By providing transparent resin nodules 25 in the displaying area, the transmittance is improved. Thus, the ninth example could make a brighter display.

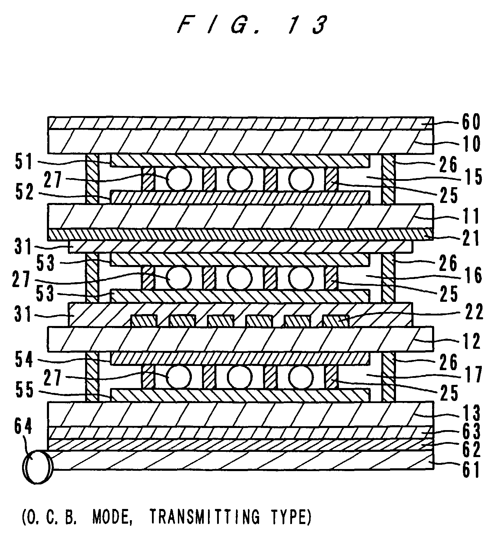

### Seventh Embodiment of Liquid Crystal Display; See Fig. 13

As Fig. 13 shows, the seventh embodiment is an OCB mode transmitting type liquid crystal display. In the seventh embodiment, different aligning layers are provided as described below. A specific example which was produced by the inventors is described.

Polycarbonate (PC) substrates were used as the substrates 10 through 13. On the respective surfaces of the substrates 11 and 12 which are in contact with the liquid crystal light control layer 16, transparent electrodes 21 and 22 were formed. The electrodes 21 and 22 were formed to be strips which are of a width of 300 µ m and extend in parallel on the respective surfaces with the extending direction of the electrodes 21 on the substrate 11 and the extending direction of the electrodes 22 on the substrate 12 being perpendicular to each other. On the electrodes 21 and 22 on the substrates 11 and 12, insulating layers 31 (PC335 made by JSR Co., Ltd.) were formed.

On the respective surfaces of the substrates 10 and 11 which are in contact with the liquid crystal light control layer 15, mutually different aligning layers 51 and 52 were formed, respectively. More specifically, on the lower surface of the substrate 10, a parallel aligning layer 51 was formed of SE-410 (made by Nissan Chemical Industries Co., Ltd.), and on the upper surface of the substrate 11, a vertical aligning layer 52 was formed of SE-1211 (made by Nissan Chemical Industries Co., Ltd.). In the same way, on the respective surface of the substrates 12 and 13 which are in contact with the liquid crystal display 17, mutually different aligning layers were formed. On the lower surface of the substrate 12, a vertical aligning layer 54 was formed of SE-1211, and on the upper surface of the substrate 13, a parallel aligning layer 53 was formed of SE-410 (made by Nissan Chemical Industries Co., Ltd.). Further, on the respective surfaces of the substrates 11 and 12 which are in contact with the liquid crystal light control layer 16, parallel aligning layers 53 were formed of SE-410 on the insulating layers 31.

In order to keep even gaps among the substrates, fixed type spacers 27 with a particle diameter of 8 µ m (N3M14 made by Ube Nitto Kasei Kogyo Co., Ltd.) were dispersed among the substrates 10 through 13 at a density of approximately 200 particles per 1mm². Also, in order to support and join the substrates with the liquid crystal light control layers thereamong, columnar resin nodules 25 were formed of thermoplastic resin STAYSTICK 371G (made by Techno Alpha Co., Ltd.) among the substrates 10 through 13. The columnar resin nodules 25 were of a diameter of 40 µ m and of a height of 8 µ m, and the resin nodules 25 were arranged in a lattice at a pitch of 300 µ m in each space among the substrates.

Further, among the substrates 10 through 13, sealing walls 26 of a square ring were formed of epoxy thermosetting resin. The epoxy thermosetting resin was prepared by mixing Micropearl (made by Sekisui Finechemical Co., Ltd.) as spacers with its main component ETRS-2200 and a hardening agent ERS-2820 (both made by Sumitomo Bakelite Co., Ltd.). In the spaces enclosed by the substrates and the sealing walls, liquid crystal was filled.

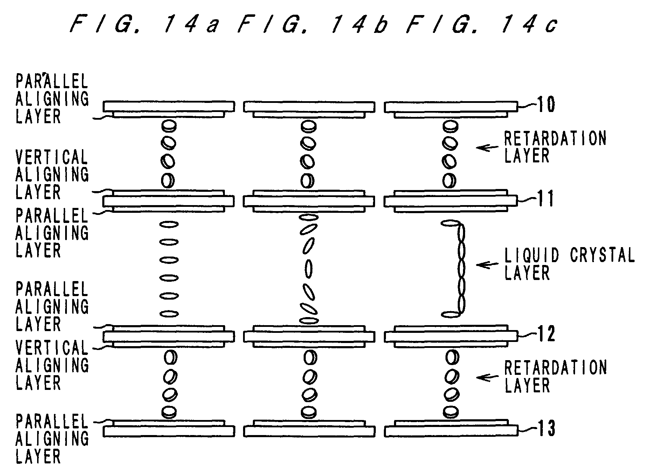

For the liquid crystal light control layers 15 and 17, discotic liquid crystal was used, and for the liquid crystal light control layer 16, nematic liquid crystal ZLE-1565 (made by Merck & Company) was used. Also, the aligning layers are subjected to rubbing treatments so that retardation which the liquid crystal molecules in the liquid crystal light control layer and the retardation layers cause to light passing therethrough will be counterbalanced and compensated. By providing aligning layers and carrying out such rubbing treatments on the aligning layers, the liquid crystal light control layers can be controlled to be aligned in the states shown by Figs. 14a, 14b and 14c when no voltages are applied, when a specified voltage V1 is applied and when another specified voltage V2 (V2>V1) is applied, respectively.

A polarizing film 60 was stuck on the upper surface of the uppermost substrate 10, and a polarizing film 63 was stuck on the lower surface of the lowermost substrate 13. The direction of polarization made by the polarizing film 60 and that made by the polarizing film 63 are perpendicular to each other. Further, a scattering film 62 and an optical guiding film 61 were stuck on the lower surface of the lowermost substrate 13. On one end of the optical guiding film 61, a back light 64 was attached.

By providing different aligning layers in the above-described way on the substrates which sandwich liquid crystal light control layers, a transmitting type liquid crystal display adopting an OCB method could be produced. This liquid crystal display could make a high quality display in vivid colors with less choromatic unevenness and good color separation while necessitating a low driving voltage.

Further, an illumination source may be provided on the back side of the liquid crystal display, and a translucent reflective film may be used as the lowermost substrate 13. In this case, the liquid crystal display can be used as a transmitting type and also as a reflective type, and the electric power consumption of the back light 64 can be reduced.

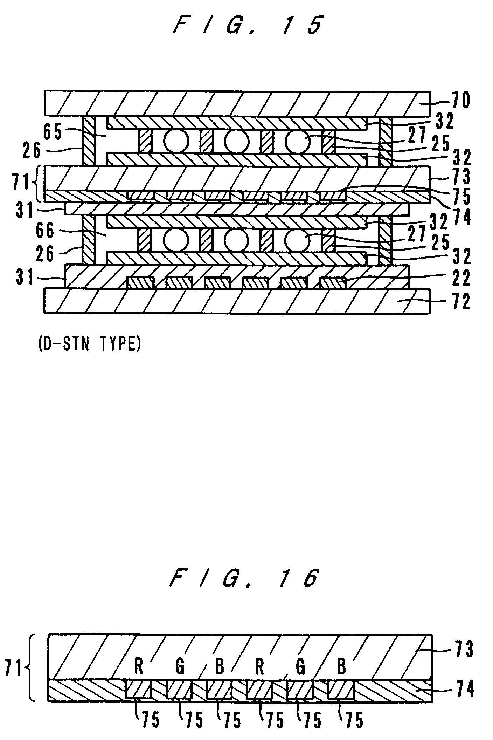

### Eighth Embodiment of Liquid Crystal Display; See Fig. 15

As Fig. 15 shows, the eighth embodiment is a full-color D-STN type liquid crystal display. In the display, two liquid crystal light control layers 65 and 66, and three substrates 70, 71 and 72 are laminated alternately, and resin nodules 25 and spacers 27 are provided between the substrates 70 and 71 and between the substrates 71 and 72 which sandwich the liquid crystal light control layers 65 and 66, respectively. A specific example which was produced by the inventors is described.

The uppermost substrates 70 is a polarizing film. The inner substrate 71 is a micro color filter substrate (see Fig. 16) which has transparent electrodes 74 on the lower surface of a transparent substrate. The lowermost substrate 72 is a polarizing film which has transparent electrodes on its upper surface. Fig. 16 shows micro color filters 75 formed on the substrate 73. A set of R, G and B micro filters forms a pixel, and the micro color filters 75 may be arranged in stripes, in oblique mosaic or in triangular mosaic.

On the electrodes 74 formed on the inner substrate (filter substrate) 71 and on the electrodes 22 formed on the lowermost substrate (polarizing film) 72, insulating layers 31 were formed. On the insulating layers 31, aligning layers 32 (AL4552 made by JSR Co., Ltd.) were formed. On the surfaces of the substrates 70 and 71 which has no electrodes and which are in contact with the liquid crystal light control layers 65 and 66, only aligning layers 32 were formed. A rubbing treatment was carried out on these aligning layers 32. Among the substrates, fixed type spacers 27 (N3M14 made by Ube Nitto Kasei Kogyo Co., Ltd.) were dispersed to keep even gaps among the substrates, and resin nodules 25 made of thermosetting resin (XN-21-2 made by Mitsui Kagaku Co., Ltd.) were arranged within the displaying area to support and join the substrates. Further, sealing walls 26 were made in the periphery of the displaying area of a material prepared by mixing spacers (Micropearl made by Sekisui Finechemical Co., Ltd.) with its main component, thermosetting resin ERS-2200 and a hardening agent ERS-2820 (both made by Sumitomo Bakelite Co., Ltd.).

For the liquid crystal light control layer 65 for compensation of retardation and for the liquid crystal light control layer 66 for display, STN liquid crystal which was prepared by mixing a chiral agent S-811 (made by Merck & Company) with MLC6068-000 (made by Merck & Company) was used.

When a voltage was applied to the D-STN type liquid crystal display to drive in a simple matrix driving method, full-color display of high quality could be attained.

### Deformation of Substrates by Patterning of Electrodes; See Fig. 17

In forming strip-like electrodes on the respective both surfaces or on the respective one surfaces of substrates and in laminating the substrates to produce a liquid crystal panel, the substrates are deformed. A liquid crystal display which is basically of the same structure as the sixth embodiment was produced. In the liquid crystal display, the uppermost substrate 10 and the lowermost substrate 13 have strip-like electrodes 21 and 22 on the respective one surfaces as shown in Fig. 17c, and the inner substrates 11 and 12 have strip-like electrodes 21 and 22 on the respective both surfaces with the electrodes on one surface of a substrate and the electrodes on the other surface of the substrate extending in the same direction as shown by Fig. 17a. The other members of the liquid crystal display are of the same structures of those of the sixth embodiment. The strip-like electrodes 21 and 22 are of a width of 300 µ m. In the liquid crystal display which used PC substrates, pixel shifts occurred, and the contrast was low.

Therefore, an experiment was conducted. On PC substrates, strip-like electrodes were formed in arrangements shown by Figs. 17a, 17b and 17c, respectively, and the expansion of these substrates by heat were measured. Each of the substrates was 150mm by 150mm, and in the center portion of a size of 100mm by 100mm, 280 strip-like ITO electrodes were formed in parallel to one another. These three kinds of substrates were baked in a clean oven at 125°C for one hour and a half. Thereafter, with respect to each of the substrates, the dimensions of the portion wherein the electrodes were formed, which had been 100mm long and 100mm wide at room temperature, were taken, and the changes in dimensions were measured. More specifically, the changes in width (X direction) at five points and the changes in lengths (Y direction) at five points were measured, and the respective averages were taken as the changes in X direction and in Y direction. The results are shown by Table 2.

**Table 2**

| Arrangement | Change (µ m) | |
|---|---|---|
| | X Direction | Y Direction |
| Fig. 17a | 0.36 | 0.20 |
| Fig. 17b | 0.18 | 0.18 |
| Fig. 17c | 0.58 | 0.23 |

As is apparent from Table 2, when the electrodes were formed in the arrangement shown by Fig. 17b, that is, when the electrodes were formed in such a way that the extending direction of the electrodes on one surface of a substrate and the extending direction of the electrodes on the other surface of the substrate would be perpendicular to each other, the changes in dimensions (deformation) were the least. Therefore, with respect to substrates which are to be provided with electrodes on the respective both surfaces, it is preferred that the electrodes are formed in the arrangement shown by Fig. 17b. Thereby, deformation of the substrates by heat during the substrate laminating process can be minimized, and consequently, pixel shifts among the liquid crystal light control layers can be reduced.

### Embodiments of Liquid Crystal Display Producing Methods

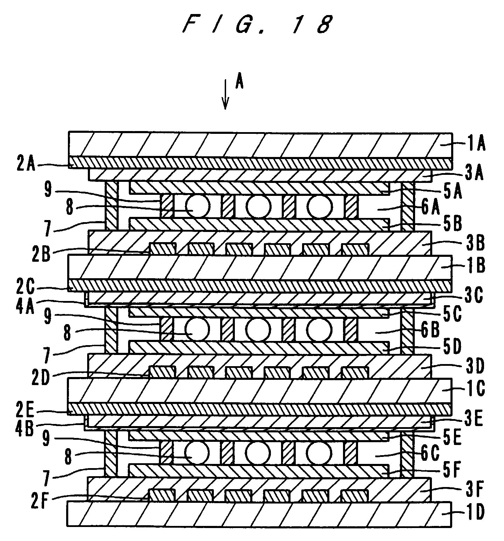

Next referring to Figs. 18 through 34, embodiments of liquid crystal display producing methods according to the present invention are described. First, a liquid crystal display produced by a producing method according to the present invention is described.

### Liquid Crystal Display Produced by a Method According to the Present Invention; See Fig. 18

Fig. 18 shows an exemplary liquid crystal display which was produced by a method according to the present invention. This liquid crystal display is a reflective type color display. In the liquid crystal display, three liquid crystal light control layers 6A, 6B and 6C are sandwiched by four flexible substrates 1A, 1B, 1C and 1D. The liquid crystal light control layer 6A reflects light of blue, the liquid crystal light control layer 6B reflects light of green, and the liquid crystal light control layer 6C reflects light of red.

The flexible substrates 1A through 1D are transparent resin film type substrates made of resin, and for example, polycarbonate (PC), polyethylene terephthalate (PET), polyether sulfone (PES), etc. are usable.

Transparent electrodes 2A, 2B, 2C, 2D, 2E and 2F are patterned into strips on the respective one surfaces of the substrates 1A and 1D and on the respective both surfaces of the substrates 1B and 1C. The electrode patterns on the surfaces of substrates which sandwich a liquid crystal light control layer are perpendicular to each other, and the intersections of the strip-like electrodes function as pixels. The transparent electrodes 2A through 2F are required only to be transparent against light of desired wavelengths. For example, the electrodes 2A through 2F are formed of ITO by sputtering.

Insulating layers 3A, 3B, 3C, 3D, 3E and 3F are covered on the transparent electrodes. The insulating layers 3A through 3F are to insulate the liquid crystal light control layers 6A, 6B and 6C from the transparent electrodes 2A through 2F. If such insulation is not necessary these insulating layers can be omitted, or color filter layers 4A and 4B can be substituted for these layers. The insulating layers 3A through 3F are formed of silicon oxide by sputtering.

Color filter layers 4A and 4B are covered on the insulating layers 3C and 3E on the transparent electrodes 2C and 2E, respectively. These color filter layers 4A and 4B can be omitted if they are not necessary. The color filter layers do not absorb light reflected from the lower liquid crystal light control layer(s) (from the rear side in the observing direction (direction A). For example, pigment dispersed color resist is suited to be used as the color filter layers. The color filter layers may be located on the other surfaces of the respective substrates.

Aligning layers 5A, 5B, 5C, 5D, 5E and 5F are covered on the color filter layers 4A, 4B, on the insulating layers 3A through 3F on the transparent electrodes 2A though 2F. The aligning layers are, for example, made of polyimide. The aligning layers can be omitted if they are not necessary.

On the flexible substrates 1A through 1D, the transparent electrodes 2A through 2F, the insulating layers 3A through 3F, the color filter layers 4A and 4B, the aligning layers 5A through 5F, etc. are formed, and the substrates with the electrodes and these layers thereon (which wifi be hereinafter referred to as merely "substrates") sandwich the liquid crystal light control layers 6A, 6B and 6C. For the liquid crystal light control layers, for example, nematic liquid crystal, smectic liquid crystal, discotic liquid crystal, cholesteric liquid crystal, etc. are usable. When the number of liquid crystal light control layers is n, at least n+1 substrates are necessary; however, according to the present invention, the number of substrates is not more than 2n-1. Accordingly, in this liquid crystal display with three liquid crystal light control layers, four or five substrates are used.

The liquid crystal light control layers 6A, 6B and 6C keep a specified thickness by use of spacers or fixed type spacers 8. As the spacers, particles made of silica, divinyl benzene resin, acrylic resin, etc. can be used, and the particle diameter of the spacers shall be determined according to the desired gap among the substrates. Here, fixed type spacers are spacers coated with thermoplastic resin, and spacers of this type can be fixed among the substrates by heat.

Among the substrates, resin sealing walls 7 are provided to enclose the respective liquid crystal light control layers. The sealing walls 7 are made of a material adhesive to the substrates, and thermosetting resin, for example, epoxy resin, acrylic resin, etc. and ultraviolet ray setting resin are usable. Spacers may be mixed in the sealing walls 7 in order to certainly keep a specified gap among the substrates.

Resin nodules 9, for example, in the forms of columns, are provided among the substrates at least within the displaying area to support the substrates. By arranging the resin nodules 9 among the pixels, unevenness of the gap is minimized, and degradation of the display performance can be prevented.

The resin nodules 9 are made of a material adhesive to the substrates. Usable materials for the resin nodules 9 were already named in connection with the first embodiment of liquid crystal display. By using a material which brings out its adhesion by pressure, for example, pressure sensitive adhesive, only by applying pressure after laminating the substrates, the substrates can be bonded by the resin nodules 9.

On the lower surface of the substrate 1D (on the opposite side of the observing surface), a light absorbing layer or a light reflecting layer may be provided according to the operation mode of the liquid crystal display. Also, the substrate 1D itself may be made to have a light absorbing characteristic or a light reflecting characteristic. In a reflective liquid crystal display which performs display by additive color mixture, for example, in a liquid crystal display which uses selective reflection of a cholesteric phase of liquid crystal such as chiral nematic liquid crystal, by providing a light absorbing layer on the lower surface of the substrate 1D or by making the substrate 1D to have a light absorbing characteristic, the contrast can be improved. In a reflective liquid crystal display which performs display by subtractive color mixture, a light reflecting layer shall be provided on the lower surface of the substrate 1D, or the substrate 1D shall be made to have a light reflecting characteristic.

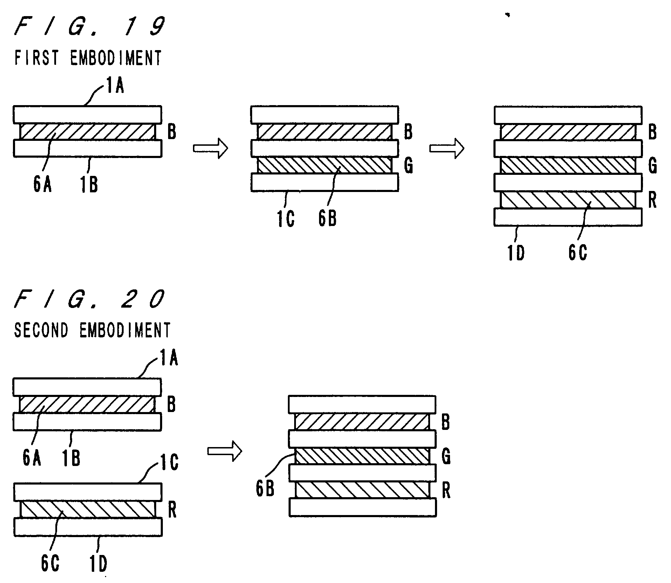

### Schema of First through Seventh Embodiments of Producing Methods; See Figs. 19 through 25

Fig. 19 shows a first embodiment of a producing method according to the present invention. Substrates 1A and 1B are laminated and joined together with a liquid crystal light control layer 6A sandwiched in-between, and thereby, a liquid crystal cell B for blue display is fabricated. Next, a substrate 1C is placed on and joined with the liquid crystal cell B with a liquid crystal light control layer 6B sandwiched in-between. Thereby, a liquid crystal cell G for green display is made, and a laminate of the liquid crystal cells B and G is fabricated. Further, a substrate 1D is placed on and joined with the laminate of the liquid crystal cells B and G with a liquid crystal light control layer 6C sandwiched in-between. Thereby, a liquid crystal cell R for red display is made, and a laminate of the liquid crystal cells B, G and R is fabricated. These liquid crystal cells can be made in any order. For example, the cell B may be fabricated after fabrication of the cell G, and then, the cell R may be fabricated.

The point of the first embodiment is as follows; first, a liquid crystal cell is fabricated by use of two substrates; next, a laminate of two liquid crystal cells is fabricated by use of the liquid crystal cell and another substrate; and a laminate of three liquid crystal cells (a three-layered liquid crystal display) is fabricated by use of the laminate of two liquid crystal cells and another substrate.

Fig. 20 shows a second embodiment of a producing method according to the present invention. A liquid crystal light control layer 6A is sandwiched between substrates 1A and 1B to fabricate a liquid crystal cell B, and a liquid crystal light control layer 6B is sandwiched between substrates 1C and 1D to fabricate a liquid crystal cell R. Next, a liquid crystal light control layer 6B is sandwiched between the liquid crystal cells B and R to fabricate a liquid crystal cell G, and consequently, a three-layered liquid crystal display is produced. According to the second embodiment, fabrication of the liquid crystal cell B and fabrication of the liquid crystal cell R can be carried out simultaneously, and the time for producing a three-layered liquid crystal display can be shortened compared with the first embodiment.

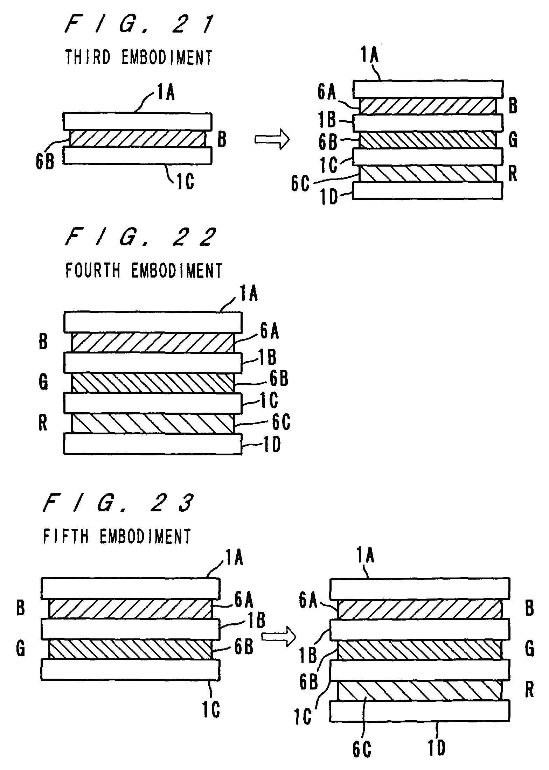

Fig. 21 shows a third embodiment of a producing method according to the present invention. First, substrates 1B and 1C are laminated together with a liquid crystal light control layer 6B sandwiched in-between, and thereby, an intermediate liquid crystal cell G is fabricated. Next, a substrate 1A is placed on the upper surface of the liquid crystal cell G with a liquid crystal light control layer 6A sandwiched in-between, while a substrate 1B is placed on the lower surface of the liquid crystal cell G with a liquid crystal light control layer 6B sandwiched in-between. Thus, the liquid crystal cells B and R are fabricated simultaneously. Therefore, in this third embodiment, the time for producing a three-layered liquid crystal display can be shortened compared with the first embodiment.

Fig. 22 shows a fourth embodiment of a producing method according to the present invention. Substrates 1A, 1B, 1C and 1D are laminated at one time with liquid crystal light control layers 6A, 6B and 6C sandwiched among the substrates. In the fourth embodiment, the laminating process is carried out only once, and the time for producing a three-layered liquid crystal display can be shortened.

Fig. 23 shows a fifth embodiment of a producing method according to the present invention. Substrates 1A, 1B and 1C are laminated at one time with liquid crystal light control layers 6A and 6B sandwiched among the substrates, and thereby, a laminate of liquid crystal cells B and G are fabricated. Next, a substrate 1D is placed on the lower surface of the substrate 1D with a liquid crystal light control layer 6C sandwiched in-between, and thereby, a laminate of the cells B and G and another liquid crystal cell R is fabricated. In the fifth embodiment, the liquid crystal cells G and R may be fabricated first, and thereafter, the liquid crystal cell B may be fabricated.

The point of the fifth embodiment is that after fabricating a laminate of two liquid crystal cells at one time, another liquid crystal cell is fabricated on the laminate of two cells by use of another substrate.

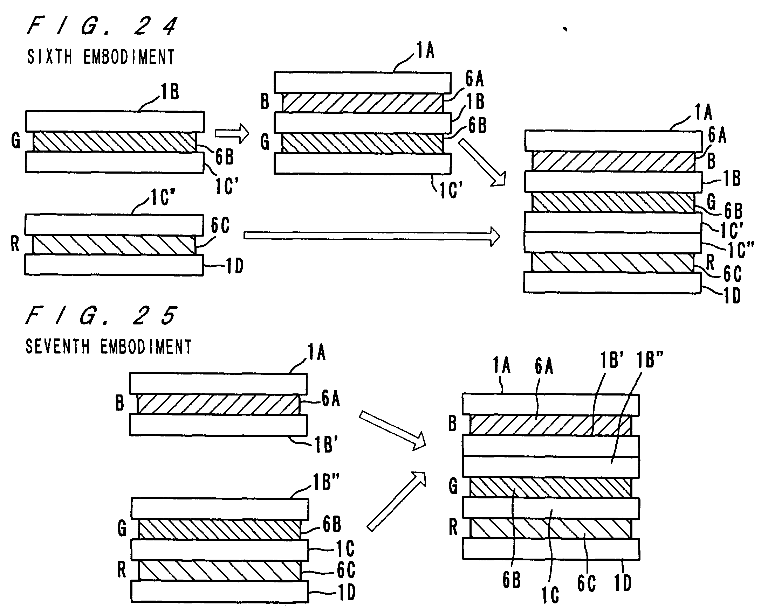

Fig. 24 shows a sixth embodiment of a producing method according to the present invention. First, substrates 1B and 1C' are laminated with a liquid crystal light control layer 6B sandwiched in-between to fabricate a liquid crystal cell G, while substrates 1C'' and 1D are laminated with a liquid crystal light control layer 6C sandwiched in-between to fabricate a liquid crystal cell R. Next, a substrate 1B is placed on the substrate 1A of the liquid crystal cell G with a liquid crystal light control layer 6A sandwiched in-between to fabricate a laminate of the liquid crystal cell G and another liquid crystal cell B. Further, the laminate of the liquid crystal cells B and G is joined with the liquid crystal cell R. The substrates 1C' and 1C'' can be joined by an adhesive or by being fastened together at their peripheral portions by fasteners.

In the sixth embodiment, as described above, two units of liquid crystal cells are fabricated separately, and thereafter, these units are joined together. In this method, fabrication of the units can be carried out simultaneously, thereby shortening the time for producing a three-layered liquid crystal display. Moreover, it is possible to check the liquid crystal cells before the final joining process, thereby lowering the production defective and improving the productivity. Further to this, in this embodiment, a red color filter can be easily provided between the liquid crystal light control layers 6B and 6C by simply inserting the red color filter between the substrates 1C' and 1C''. Providing the red filter is advantageous for this liquid crystal display, inasmuch as the liquid crystal light control layer 6C tends to scatter light components of wavelength shorter than the red light component if no red color filter is provided.

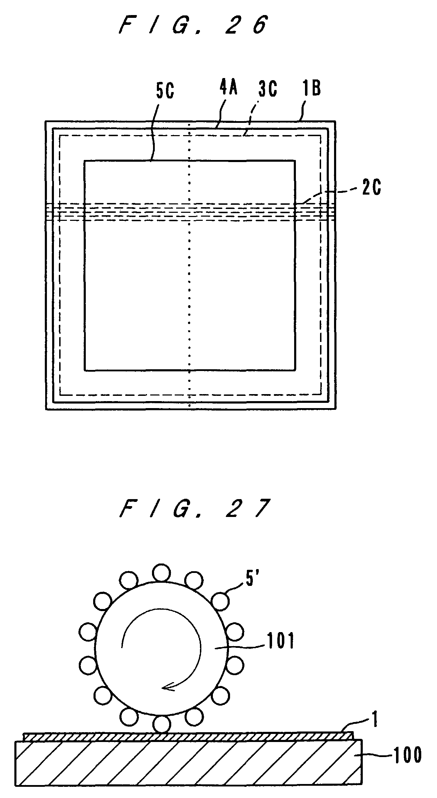

Fig. 25 shows a seventh embodiment of a producing method according to the present invention. First, substrates 1A and 1B' are laminated with a liquid crystal light control layer 6A sandwiched in-between to fabricate a liquid crystal cell B, while substrates 1B'', 1C and 1D are laminated with liquid crystal light control layers 6B and 6C sandwiched among the substrates to fabricate a lamination of liquid crystal cells G and R. Next, the liquid crystal cell B and the laminate of the liquid crystal cells G and R are joined together. The substrates 1B' and 1B'' can be joined together by an adhesive or by being fastened at the peripheral portions by fasteners. This seventh embodiment brings the same effect as the sixth embodiment.

### First Embodiment of Producing Method; See Figs. 19 and 26-28

The first embodiment shown by Fig. 19, that is, the method in which substrates are laminated one by one is described in detail.

First, ITO is sputtered on a flexible substrate to form an ITO film thereon. Thereafter, photolithography is carried out to form strip-like transparent substrates. In this way, on at least respective one surfaces of the outer substrates 1A and 1D and on the respective both surfaces of the inner substrates 1B and 1C, electrodes are patterned.

On the surfaces of the substrates which are to face liquid crystal light control layers, insulating layers 3A through 3F and/or aligning layers 5A and 5F are coated according to the necessity. Fig. 26 shows the lower surface of the substrate 1B. In the first embodiment, after patterning transparent electrodes on substrates, insulating layers, color filter layers and/or aligning layers are provided according to the necessity. For formation of these layers, a spin coater, a die coater or the like can be used. Fig. 27 shows an exemplary way of forming an aligning layer. A flexible substrate 1 is sucked and fixed on a stage 100, and a die coater 101 is rotated to coat a material 5' on the substrate 1. Then, the substrate is baked at 170°C for one hour. The material 5' is selected considering the conformity with the substrate 1 and the impossibility of flowing impurities into liquid crystal light control layers. This process of forming insulating layers, color filter layers and aligning layers is hereinafter referred to as a film forming process.

Next, on at least one of two substrates which sandwich each liquid crystal light control layer, a sealing wall 7, resin nodules 9 and spacers 8 are provided. Which of these members shall be provided to which of the two substrates can be determined arbitrarily. These members are arranged in such a way not to deform other members. The resin nodules 9 are arranged on one of the two substrates at least entirely in the displaying area by screen printing. After arranging the resin nodules 9, the sealing wall 7 which includes spacers is arranged on the same surface of the same substrate to enclose the displaying area by use of a dispenser or by screen printing. The spacers or fixed type spacers 8 are sprayed at least entirely in the displaying area of the other substrate. It is preferred to carry out a treatment to erase tuck on the surface of the sealing wall 7, such as a heat treatment, before laminating the substrates. By carrying out such a treatment, fusion of impurities into the liquid crystal light control layer can be prevented. When fixed type spacers are used, the spacers may be heated at appropriate temperature to be fixed on the substrate. This process of providing sealing walls, resin nodules, spacers, etc. on substrates is hereinafter referred to as an arranging process.

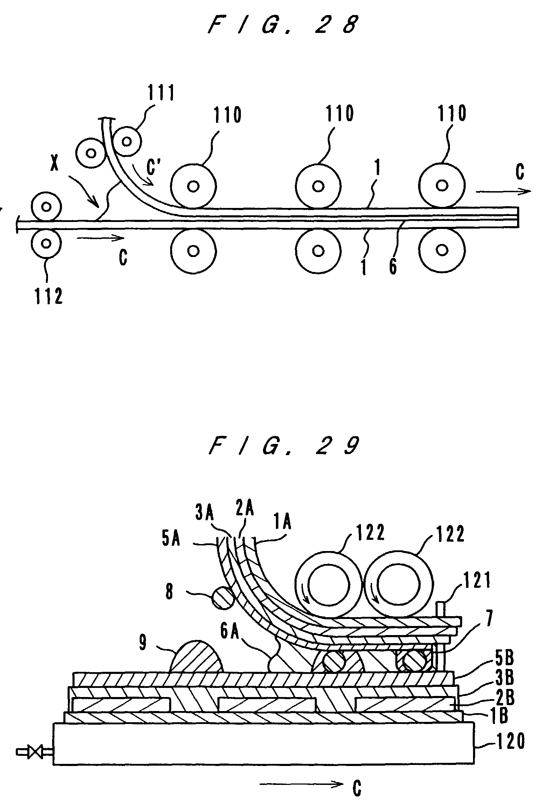

The substrates which have been through the film forming process and the arranging process are laminated one by one by use of a laminating device as shown by Fig. 28 in such a way not to take bubbles in between the substrates. The laminating device has pairs of heating/pressing rollers 110 which are capable of nipping two substrates 1, which are capable of being heated and which are capable of rotating independently of each other. In producing a liquid crystal display with three liquid crystal light control layers, this process is repeated three times. This process is hereinafter referred to as a laminating process.

The device used for the laminating process is generally described. The device has pairs of conveyer rollers 111 and 112 which rotate on axes perpendicular to the traveling directions C and C' respectively. The device further has pairs of heating/pressing rollers 110 which rotate on axes perpendicular to the traveling direction C independently of each other. A plurality of substrates or a plurality of liquid crystal cells can be nipped between the heating/pressing rollers 110 in each pair. Additionally, a liquid crystal dispenser which dispenses a specified amount of liquid crystal on a substrate at a position X may be provided immediately before the first pair of heating/pressing rollers 110. The rollers 110 may be controlled by a mechanism to press each roller against the substrates by air pressure, spring forth or the like. The conveyer rollers 111 and 112 and the heating/pressing rollers 110 may be made into a unit, and a guide member which guides the substrates 1 in the direction C may be provided.

In order to prevent bubbles from being taken in the liquid crystal light control layer during the laminating process, the substrates are preferably positioned at more than a specified angle to each other at the laminating position. For this purpose, the laminating device has a holder which holds the trailing end of a substrate upward. In a process of laminating two substrates while filling liquid crystal between the substrates, if bubbles are taken in the liquid crystal, it will not be good for display performance and reliability of the liquid crystal display. In order to avoid this trouble, it is preferred to carry out the laminating process under reduced pressure, for example, in a vacuum chamber.

The substrates may be laminated from the lowermost 1D to the uppermost 1A in order or may be laminated from the uppermost 1A to the lowermost 1D in order.

Substrates to be laminated together are conveyed in the direction C and C', and at this time, preferably, markers are used for correct positioning of the substrates.

The substrates conveyed by the conveyer rollers 111 and 112 and positioned correctly are laminated together by the heating/pressing rollers 110. At this time, liquid crystal is dropped on one of the substrates. By use of the heating/pressing rollers 110, while a specified gap is made between the substrates evenly, the liquid crystal is spread between the substrates, and thus, the substrates are laminated. On one of the substrates, the sealing wall 7 and the resin nodules 9 are provided. At this stage, the sealing wall 7 and the resin nodules 9 are crushed to a specified height by the heating/pressing rollers 110 and join the substrates together.

However, if resin which is adhesive even without being heated is used as the materials of the sealing wall 7 and the resin nodules 9, the temperature of the heating/pressing rollers 110 does not have to be raised. As means for heating substrates for lamination thereof, any heating method of heating by heating wires, induction heating, heating by microwave irradiation, heating by electron beam irradiation, frictional heating by ultrasonic waves, heating by far infrared irradiation, heating, heating by laser irradiation, Joule heating by supplying a current to transparent electrodes, etc. can be adopted, and some of these methods can be combined. If heating is necessary during the laminating process, the substrates and the liquid crystal cells shall be heated evenly so as to avoid bend and pixel shifts.

The liquid crystal display may be structured to have steps so that electrode terminal portions of each layer will be exposed and that control signal lines can be connected to the electrode terminal portions easily. This structure can be realized by setting displaying areas in mutually different portions of substrates and/or by using substrates of different shapes. Preferably, neither the resin nodules nor the sealing wall are provided on the electrode terminal portions of each layer, and liquid crystal is not supplied thereto. If the liquid crystal cells are laminated with the pixel shift being within a half of a pixel, the picture quality of the display will not degrade.

After the four substrates 1A through 1D, if necessary, a heat treatment or radiation of ultraviolet rays is carried out to harden the sealing walls 7 and the resin nodules 9.

In order to produce a display with n liquid crystal light control layers, the laminating process is repeated n times. This method permits production of a liquid crystal display in which pixel shifts in the laminating direction can be minimized by use of a simple device.

### Second Embodiment of Producing Method; See Figs. 20 and 29

Next, the second embodiment is described in detail. According to the second embodiment, as Fig. 20 shows, first, two liquid crystal cells B and R which have liquid crystal light control layers 6A and 6C respectively are fabricated. Next, the two liquid crystal cells are laminated with an intermediate liquid crystal light control layer 6B sandwiched in-between, and thus, a laminate of liquid crystal cells B, G and R is fabricated.

First, on flexible substrates 1A through 1D, strip-like transparent electrodes 2A through 2F are formed, and the substrates 1A through 1D are subjected to the above-described film forming process and arranging process. The details of these processes were already described in connection with the first embodiment.

Thereafter, a pair of substrates 1A and 1B are laminated with liquid crystal 6A filled in-between by use of a device shown by Fig. 29. Another pair of substrates 1C and 1D are laminated with liquid crystal 6B filled in-between by use of the same device. Thus, two liquid crystal cells are fabricated. Fig. 29 shows a case of laminating the substrates 1A and 1B while filling the liquid crystal 6A in-between. Although the lower surface of the substrate 1B has gone through the film forming process, the layers formed thereon are not shown in Fig. 29.

The substrate 1B is fixed on a planar stage 120 with its one end hooked by a rod 121, and one end of the other substrate 1B is also hooked by the rod 121 so that the substrates 1A and 1B can be positioned correctly. Thereafter, as the planar stage 120 is sliding in a direction C, heating/pressing rollers 122, which are fixed, heat and press the substrates 1A and 1B, and in this way, the substrates 1A and 1B are laminated with liquid crystal 6A filled in-between. The planar stage 120 vacuum-sucks the substrate 1B and heats the substrate 1B. The planar stage 120 may be fixed, and the heating/pressing rollers 122 may be movable in reverse to the direction C while rotating. Also, both the planar stage 120 and the rollers 122 may be movable in mutually opposite directions.

In order to avoid intake of bubbles in the liquid crystal light control layer 6A, the substrate 1A shall be at more than a specified angle to the substrate 1B fixed on the planar stage 120 at all the time. For this purpose, the device has a member for holding the trailing end of the substrate 1A. The intake of bubbles is not good for display performance and reliability of the display. Therefore, as already mentioned in connection with the first embodiment, this laminating process may be carried out under reduced pressure, for example, in a vacuum chamber. In this case, if it is difficult to fix the substrate 1B on the planar stage 120 by vacuum, the periphery of the substrate can be supported mechanically.

In this way, a liquid crystal cell which has the liquid crystal light control layer 6A between the substrates 1A and 1B and another liquid crystal cell which has the liquid crystal light control layer 6C between the substrates 1C and 1D are fabricated. Thereafter, by use of the device shown by Fig. 29, these two liquid crystal cells are laminated while the liquid crystal 6B is filled in-between.

In the second embodiment, two liquid crystal cells can be fabricated simultaneously, and the time for producing a three-layered liquid crystal display can be shortened compared with the first embodiment in which the substrates are laminated one by one. In the second embodiment, the laminating device shown by Fig. 28 can be used.

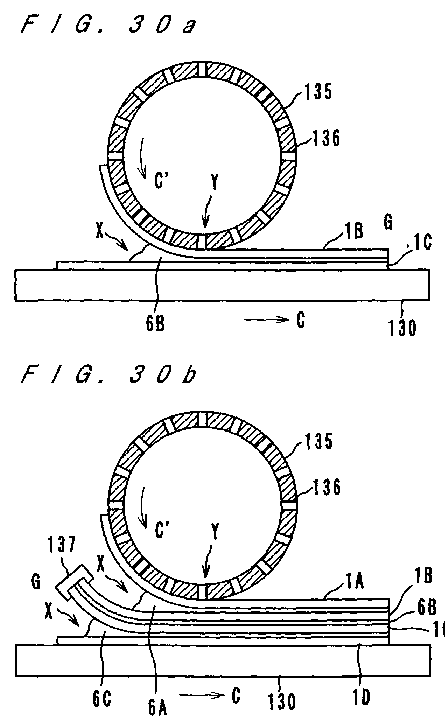

### Third Embodiment of Producing Method; See Figs. 21 and 30

Next, the third embodiment is described in detail. According to the third embodiment, as Fig. 21 shows, in producing a three-layered liquid crystal display comprising three liquid crystal light control layers and four substrates, first, the liquid crystal cell G which has the intermediate liquid crystal light control layer 6B is fabricated, and next, the substrates 1A and 1B are laminated on the upper surface and on the lower surface of the liquid crystal cell G with the liquid crystal light control layers 6A and 6C sandwiched in-between, respectively.

First, on flexible substrates 1A through 1D, strip-like transparent electrodes 2A through 2F are formed, and the substrates 1A through 1D are subjected to the film forming process and the arranging process. The details of these processes were already described in connection with the first embodiment.

Thereafter, a pair of substrates 1B and 1C are laminated by use of a device shown by Figs. 30a and 30b while liquid crystal 6B is filled between the substrates 1B and 1C, and thereby, a liquid crystal cell G is fabricated. Fig. 30a shows this laminating process. The substrate 1C is vacuum-sucked on a planar stage 130, which has heating means, and the substrate 1B is vacuum-sucked on a cylindrical stage 135, which has heating means. The planar stage 130 is movable in a direction C, and the cylindrical stage 135 is fixed at a laminating position Y and is capable of rotating in a direction C'. The cylindrical stage 135 has a number of suction holes 136 on its circumference and sucks and holds the substrate 1B. The cylindrical stage 135, while rotating, releases the substrate 1B from the suction gradually at the laminating position Y. At a position X, an appropriate amount of liquid crystal is supplied to between the substrates 1B and 1C from a dispenser or the like.

Next, as Fig. 30b shows, the lowermost substrate 1D is sucked on the planar stage 130, and the liquid crystal cell G which was fabricated in the above-described way is placed on the substrate 1D. Further, the uppermost substrate 1A is sucked on the cylindrical stage 135. While liquid crystal 6C and liquid crystal 6A are filled between the substrate 1D and the liquid crystal cell G and between the substrate 1A and the liquid crystal cell G respectively, the substrates 1D and 1A and the liquid crystal cell G are laminated. The end of the liquid crystal cell G is held by a movable holder 137 in such a way that the liquid crystal cell G can be constantly at a specified distance from and at a specified angle to the substrate 1D at the liquid crystal supply position X.

The planar stage 130 may be fixed, and the cylindrical stage 135 may be movable in the reverse direction of the direction C while rotating. Also, both the planar stage 130 and the cylindrical stage 135 may be movable in mutually opposite directions. The measures to avoid intake of bubbles in the liquid crystal light control layers and the heating means which were described in connection with the first and second embodiments are adopted. The devices shown by Fig. 28 and 29 can be used to carry out the method of the third embodiment, and on the contrary, the device shown by Figs. 30a and 30b can be used to carry out the methods of the first and second embodiments.

When a liquid crystal cell which has a liquid crystal light control layer between two substrates is to be laminated with a substrate or with another liquid crystal cell as shown by Fig. 30b, the resin nodules provided among the substrates are likely to be displaced immediately after the lamination and before hardening of the resin nodules. In such a case, therefore, it is preferred to provide resin nodules between the substrates 1A and 1B and between the substrates 1C and 1D more densely so as to avoid displacement of the resin nodules.

### Fourth Embodiment of Producing Method; See Figs. 22, 31 and 32

The fourth embodiment is described in detail. According to the fourth embodiment, as Fig. 22 shows, four substrates are laminated at one time while liquid crystal is filled among the substrates.

First, on flexible substrates 1A through 1D, strip-like transparent substrates 2A through 2F are formed, and these substrates 1A through 1D are subjected to the film forming process and the arranging process. The details of these processes were already described in connection with the first embodiment.

Thereafter, while the substrates 1A through 1D are passing through a device shown by Fig. 31, the substrates 1A through 1D are laminated. This laminating device has a first pair of pressing rollers 141, a second pair of pressing rollers 142, a pair of heating/pressing rollers 143 and a pair of conveyer rollers 144. Each of the substrates are conveyed to the rollers 141 through 144 from a pair of conveyer rollers (not shown) located at an upstream position in the traveling direction D' in such a way that the substrates will be positioned correctly. In the meantime, liquid crystal is supplied to among the substrates from die coaters 145.

The rollers 141 through 144 are driven to rotate to convey the substrates in the direction D. The pressure applied to the substrates from the rollers 141 through 144 is controlled by spring forth or by air pressure of air cylinders.

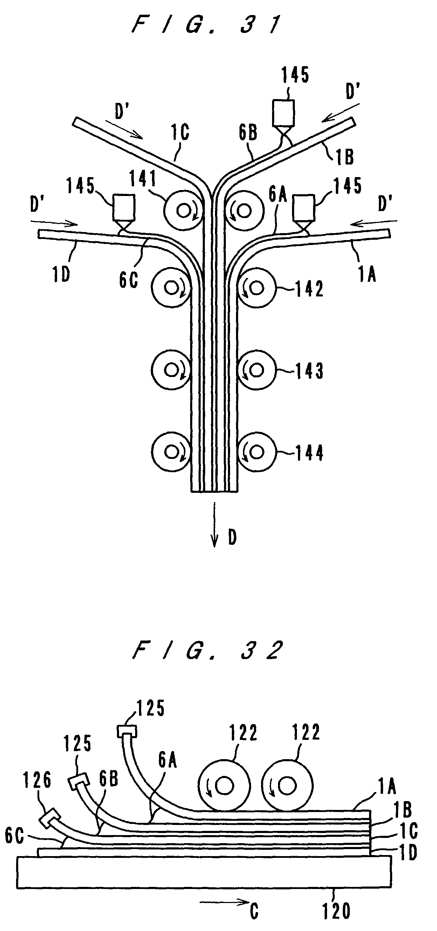

The method of the fourth embodiment can be carried out in a way shown by Fig. 32. The laminating device shown by Fig. 32 is basically of the same structure of the device shown by Fig. 29. The substrate 1D is sucked on a planar stage 120, and the substrates 1C, 1B and 1A are laminated thereon while liquid crystal 6C, liquid crystal 6B and liquid crystal 6A are supplied to among the substrates respectively. By pressing the substrates by use of heating/pressing rollers 122, the four substrates are laminated and joined together at one time with the liquid crystal filled among the substrates. The substrates are positioned correctly at their leading ends in the direction C, and the respective trailing ends of the substrates are held by movable holders 125.

A case of laminating four substrates while making three liquid crystal light control layers among the substrates has been described. According to the fourth embodiment, however, it is possible to laminate n+1 substrates while making n liquid crystal light control layers among the substrates at one time, which is very efficient.

### Fifth Embodiment; See Figs. 23, 33 and 34

The fifth embodiment is described in detail. According to the fifth embodiment, as Fig. 23 shows, first, a laminate of liquid crystal cells B and G which has liquid crystal light control layers 6A and 6B among substrates 1A, 1B and 1C is fabricated, and next, a substrate 1D is laminated on the lower surface of the substrate 1C with a liquid crystal light control layer 6C sandwiched in-between.

First, on flexible substrates 1A through 1D, strip-like substrates 2A through 2F are formed, and these substrates are subjected to the film forming process and the arranging process. The details of these processes were already described in connection with the first embodiment.

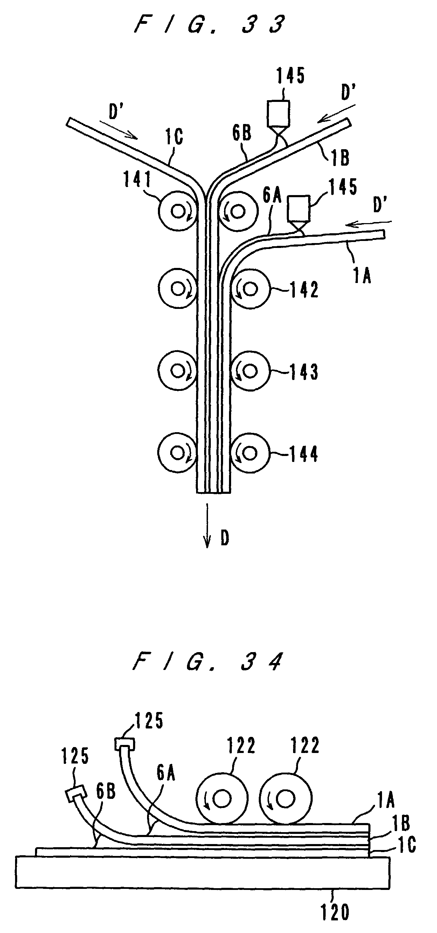

Thereafter, the substrates 1A, 1B and 1C are laminated at one time while liquid crystal 6A and liquid crystal 6B are filled among the substrates. Any of the devices shown by Figs. 28, 29, 30 and 31 can be used for this laminating process. Fig. 33 shows a case of using the device shown by Fig. 31. In this case, while the three substrates 1A, 1B and 1C are passing through between the pairs of rollers 141, 142, 143 and 144, the substrates are laminated with the liquid crystal 6A and the liquid crystal 6B filled among the substrates.

Fig. 34 shows a case of using the device shown by Fig. 29. In this case, the three substrates 1A, 1B and 1C are laminated with the liquid crystal 6A and the liquid crystal 6B filled among the substrates by being pressed by the heating/pressing rollers 122 against the planar stage 120.

Next, the substrate 1D is laminated on a laminate of the liquid crystal cells, which was fabricated in the above-described way, while liquid crystal 6C is filled between the substrate and the laminate. Any of the devices shown by Figs. 28, 29, 30 and 31 can be used for this laminating process.

### Sixth Embodiment of Producing Method; See Figs. 24 and 28-31

The sixth embodiment is described in detail. According to the sixth embodiment, as Fig. 24 shows, in producing a liquid crystal display with three liquid crystal light control layers among five substrates, first, liquid crystal cell G and R with liquid crystal light control layers 6B and 6C respectively are fabricated, and next, a substrate 1A is laminated on the liquid crystal cell G with a liquid crystal light control layer 6A sandwiched in-between, whereby a laminate of liquid crystal cells B and G is fabricated. Further, the liquid crystal cell R is placed on and joined with the laminate of liquid crystal cells B and G.

First, on flexible substrates 1A, 1B, 1C', 1C'' and 1D, strip-like transparent electrodes 2A and 2F are formed, and these substrates 1A through 1D are subjected to the film forming process and the arranging process. The details of these processes were already described in connection with the first embodiment. However, the respective one surfaces of the substrates 1C' and 1C'' are not subjected to the film forming process.

The substrates 1B and 1C' are laminated with liquid crystal 6B filled in-between to fabricate a liquid crystal cell G, and the substrates 1C'' and 1D are laminated with liquid crystal 6C filled in-between to fabricate a liquid crystal cell R. For the laminating processes, any of the devices shown by Figs. 28, 29, 30 and 31 can be used. For example, the device shown by Fig. 30 is suited to be used for the laminating processes.

Next, the substrate 1A is placed on the substrate 1B of the liquid crystal cell G which was fabricated in this way with liquid crystal 6A filled between the substrates, and thereby, a laminate of liquid crystal cells G and B is fabricated. For this laminating process, any of the devices shown by Figs. 28, 29, 30 and 31 can be used.

Further, the liquid crystal cell R and the laminate of liquid crystal cells B and G are joined. Specifically, the substrates 1C' and 1C'' are joined together by an adhesive or are fastened to each other at the periphery by fasteners.

### Seventh Embodiment of Producing Method; See Figs. 25 and 28-31

The seventh embodiment is described. According to the seventh embodiment, as Fig. 25 shows, in producing a liquid crystal display with three liquid crystal light control layers among five substrates, first, a liquid crystal cell B with a liquid crystal light control layer 6A and a laminate of liquid crystal cells G and R which have liquid crystal light control layers 6B and 6C respectively are fabricated. Next, the liquid crystal cell B and the laminate of liquid crystal cells G and R are joined together.

First, on flexible substrates 1A, 1B', 1B'', 1C and 1D, strip-like transparent electrodes 2A and 2F are formed, and these substrates 1A through 1D are subjected to the film forming process and the arranging process. The details of these processes were already described in connection with the first embodiment. However, the respective one surfaces of the substrates 1B' and 1B'' are not subjected to the film forming process.

The substrates 1A and 1B' are laminated with liquid crystal 6A filled between the substrates to fabricate a liquid crystal cell B. Simultaneously, the substrates 1B'', 1C and 1D are laminated with liquid crystal 6B and liquid crystal 6C filled among the substrates to fabricate a laminate of liquid crystal cells G and R. For the laminating processes, any of the devices shown by Figs. 28, 29, 30 and 31 can be used. For example, the device shown by Fig. 30 is suited to be used for the laminating process.

Next, the laminate of liquid crystal cells G and R and the liquid crystal cell B are joined. Specifically, the substrates 1B' and 1B'' are joined together by an adhesive or are fastened to each other at the periphery by fasteners.

### Other Embodiments

In each of the liquid crystal displays, the shape and the pattern of electrodes on the substrates and the necessity of insulating layers and aligning layers and the materials thereof can be determined arbitrarily.

As the embodiments of producing methods, methods of producing a liquid crystal display with three liquid crystal light control layers have been described. However, liquid crystal displays with more liquid crystal light control layers can be produced in these methods. For example, a liquid crystal display with four liquid crystal light control layers among five substrates or among six substrates can be produced in the methods according to the first to seventh embodiments. According to the first embodiment, five substrates are laminated one by one. According to the second embodiment, a liquid crystal cell and a laminate of two liquid crystal cells are fabricated, and the liquid crystal cell and the laminate of two cells are laminated with another liquid crystal light control layer sandwiched in-between. According to the third embodiment, a laminate of two liquid crystal cells is fabricated, and other two substrates are laminated on the upper surface and on the lower surface of the laminate with liquid crystal light control layers sandwiched among the substrates and the laminate. According to the fourth embodiment, five substrates are laminated at one time with four liquid crystal light control layers sandwiched among the substrates. According to the fifth to seventh embodiments, the step of fabricating a laminate of two liquid crystal cells is replaced by a step of fabricating a laminate of three liquid crystal cells.

Although the present invention has been described in connection with the preferred embodiments above, it is to be noted that various changes and modifications are possible to those who are skilled in the art. Such changes and modifications are to be understood as being within the scope of the present invention.

## Claims

1. A liquid crystal display comprising:
n+1 (where n is a natural number not less than 2) substrates and n liquid crystal light control layers alternately stacked;
wherein each of said liquid crystal light control layers comprises:
a liquid crystal material;
a plurality of spacers for keeping a gap between the substrates which sandwich the liquid crystal light control layer; and
a plurality of resin nodules for connecting the substrates which sandwich the liquid crystal light control layer, said resin nodules being distributed in accordance with a predetermined arrangement in a displaying area of the liquid crystal light control layer.

2. The liquid crystal display according to claim 1, wherein at least one of said substrates is flexible.

3. The liquid crystal display according to claim 1, wherein all of said substrates are flexible.

4. The liquid crystal display according to claim 1, wherein said resin nodules are made of at least one of a thermoplastic resin, a thermosetting resin and a ultraviolet ray setting resin.

5. The liquid crystal display according to claim 1, wherein said resin nodules are columnar and are arranged in a periodic lattice.

6. The liquid crystal display according to claim 1, wherein each of said resin nodules contains at least one spacer therein.

7. The liquid crystal display according to claim 1, wherein each of said resin nodules is opaque.

8. The liquid crystal display according to claim 7, wherein each of said resin nodules is black.

9. The liquid crystal display according to claim 1, wherein each of said resin nodules is transparent.

10. The liquid crystal display according to claim 1, wherein each of said liquid crystal light control layer comprises a seal surrounding the displaying area thereof.

11. The liquid crystal display according to claim 10, wherein said seal contains spacers therein.

12. The liquid crystal display according to claim 10, wherein said seal is made of at least one of a thermoplastic resin, a thermosetting resin and a ultraviolet ray setting resin.

13. The liquid crystal display according to claim 1, wherein each of said spacers is coated with a resin material.

14. The liquid crystal display according to claim 13, wherein said resin material is at least one of a thermoplastic resin material, a thermosetting resin material and a ultraviolet ray setting resin material.

15. The liquid crystal display according to claim 1, wherein each of said substrates comprises a plurality of electrodes.

16. The liquid crystal display according to claim 1, wherein:
the n-1 substrates of the n+1 substrates which are sandwiched by the n liquid crystal control layers have a plurality of electrodes on their respective both surfaces; and
the other substrates has a plurality of electrodes on their respective one surfaces.

17. The liquid crystal display according to claim 16, wherein:
each of said electrodes is in a shape of a strip; and
said electrodes which are provided on each surface of said substrates are arranged in parallel.

18. The liquid crystal display according to claim 17, wherein said electrodes provided on the both surfaces of each of said n-1 substrates are arranged in parallel.

19. The liquid crystal display according to claim 17, wherein said electrodes provided on one surface of each of said n-1 substrates are arranged orthogonally to said electrodes provided on the other surface of the same substrate.

20. The liquid crystal display according to claim 1, wherein:
n is 3; and
the three liquid crystal light control layers are for controffing blue, green and red, respectively.

21. The liquid crystal display according to claim 20, wherein the liquid crystal material of each of said liquid crystal control layers exhibits a cholesteric phase.

22. The liquid crystal display according to claim 21, wherein the liquid crystal material of each of said liquid crystal control layers exhibits a bistable characteristic.

23. The liquid crystal display according to claim 1, wherein at least one of said substrates has a light polarizing characteristic or comprises a light polarizing layer.

24. The liquid crystal display according to claim 1, wherein at least one of said substrates has a color filtering characteristic or comprises a color filtering layer.

25. The liquid crystal display according to claim 1, wherein at least one of said substrates has a retardation characteristic or comprises a retardation layer.

26. The liquid crystal display according to claim 1, wherein one of said substrates which is located in a side opposite to a side through which external light is incident to said liquid crystal display has a light absorbing characteristic or comprises a light absorbing layer.

27. The liquid crystal display according to claim 1, wherein one of said substrates which is located in a side opposite to a side through which external light is incident to said liquid crystal display has a light reflecting characteristic or comprises a light reflecting layer.

28. The liquid crystal display according to claim 1, wherein one of said substrates which is located in a side opposite to a side through which external light is incident to said liquid crystal display has a light scattering characteristic or comprises a light scattering layer.

29. The liquid crystal display according to claim 1, wherein one of said substrates which is located in a side opposite to a side through which external light is incident to said liquid crystal display has a anti-reflecting characteristic or comprises an anti-reflecting layer.

30. A liquid crystal display comprising:
a first unit comprising a first substrate, a first liquid crystal light control layer, a second substrate, a second liquid crystal light control layer and a third substrate which are stacked in this order; and
a second unit which is adhered onto said first unit, said second unit comprising a fourth substrate, a third liquid crystal light control layer and a fifth substrate which are stacked in this order.

31. The liquid crystal display according to claim 30, wherein external light is incident to said first unit through said second unit.

32. The liquid crystal display according to claim 31, wherein said first liquid crystal light control layer, said second liquid crystal light control layer and said third liquid crystal light control layer are for controlling light of red, light of green and light of blue, respectively.

33. The liquid crystal display according to claim 30, wherein external light is incident to said second unit through said first unit.

34. The liquid crystal display according to claim 33, wherein said first liquid crystal light control layer, said second liquid crystal light control layer and said third liquid crystal light control layer are for controlling light of green, light of blue and light of red.

35. The liquid crystal display according to clam 30, wherein at least one of said first, second, third, fourth and fifth substrates is flexible.

36. The liquid crystal display according to claim 35, wherein all of said first, second, third, fourth and fifth substrates are flexible.

37. The liquid crystal display according to claim 30, wherein a plurality of resin nodules are included in a displaying area of at least one of said first, second and third liquid crystal light control layers.

38. The liquid crystal display according to claim 37, wherein said resin nodules are arranged in a predetermined way.

39. The liquid crystal display according to claim 38, wherein said resin nodules are columnar and are arranged in a periodic lattice.

40. A method for producing a liquid crystal display comprising the steps of:
(a) filling a first liquid crystal material between a first substrate and a second substrate by pressing said first substrate and said second substrate against each other; and
(b) filling a second liquid crystal material between said second substrate and a third substrate by pressing second substrate and said third substrate against each other.

41. The method according to claim 40, wherein said steps (a) and (b) are simultaneously executed.

42. The method according to claim 40, wherein said steps (a) and (b) are sequentially executed.

43. The method according to claim 40, further comprising the steps of:
(c) filling a third liquid crystal material between said third substrate and a fourth substrate by pressing said third substrate and said fourth substrate against each other.

44. The method according to claim 43, wherein said steps (a), (b) and (c) are simultaneously executed.

45. The method according to claim 43, wherein said steps (a), (b) and (c) are sequentially executed.

46. The method according to claim 40, further comprising the steps of:
(c) filling a third liquid crystal material between a fourth substrate and a fifth substrate by pressing said fourth substrate and said fifth substrate against each other; and
(d) joining said third substrate and said fourth substrate together.

47. The method according to claim 40, wherein the step (a) comprises the steps of:
(a-1) supplying the first liquid crystal material on said first substrate; and
(a-2) spreading the first liquid crystal material by pressing said second substrate against said first substrate through the first liquid crystal material.

48. The method according to claim 47, wherein the step (a-2) comprises the steps of:
(a-2-1) placing said first substrate on a table; and
(a-2-2) pressing said second substrate against said first substrate placed on the table by using at least one roller.

49. The method according to claim 47, wherein the step (a-2) comprises the step of:
(a-2-1) pressing said first substrate and said second substrate by inserting said first substrate and said second substrate into a nip of a pair of rollers.

50. A method for producing a liquid crystal display comprising the steps of:
(a) providing a first liquid crystal display unit which comprises p (where p is a natural number not less than 2) liquid crystal light control layers and p+1 substrates alternately stacked;
(b) providing a second liquid crystal display unit which comprises q (where q is a natural number not less than 1) liquid crystal light control layers and q+1 substrates alternately stacked; and
(c) stacking and joining said first liquid crystal display unit and said second liquid crystal display unit together.
